# EUROPEAN PATENT SPECIFICATION

(11) **EP 4 571 441 B1**
(45) Date of publication and mention of the grant of the patent: **21.10.2026**
(21) Application number: 23895575.1
(22) Date of filing: 18.12.2023
(51) Int. Cl.: G05B 19/418, B23K 26/21, B23K 26/03, B23K 26/08, B23K 37/02, B23K 31/12, B23K 31/02

(54) **TERMINAL POST WELDING METHOD AND TERMINAL POST WELDING SYSTEM**
ANSCHLUSSPOSTSCHWEISSVERFAHREN UND ANSCHLUSSPOSTSCHWEISSSYSTEM
PROCÉDÉ DE SOUDAGE DE MONTANT DE BORNE ET SYSTÈME DE SOUDAGE DE MONTANT DE BORNE

(30) Priority: 08.10.2023 CN 202311289751
(43) Date of publication of application: 18.06.2025
(73) Proprietor: Contemporary Amperex Technology (Hong Kong) Limited, Central, Central And Western District (HK)
(72) Inventor: WU, Kai, Ningde, Fujian 352100 (CN); ZHAO, Jun, Ningde, Fujian 352100 (CN); WU, Ying, Ningde, Fujian 352100 (CN); ZHAO, Tongtong, Ningde, Fujian 352100 (CN)
(74) Representative: Holt, Lucy Rose
(86) International application number: PCT/CN2023/139614
(87) International publication number: WO 2025/077005

(56) References cited:
- CN-A- 111 545 854
- CN-A- 114 571 073
- CN-A- 114 571 073
- CN-A- 115 241 587
- CN-A- 115 837 541
- CN-A- 116 485 880
- CN-A- 116 632 465
- CN-A- 116 673 624
- CN-A- 117 020 414
- CN-U- 218 193 148
- KR-A- 20230 106 288
- US-A- 5 572 102
- PAULO JOÃO ET AL: "PlanPAS -Plans Parser for Automated Systems", 24 May 2013 (2013-05-24), pages 1 - 6, XP093255780, Retrieved from the Internet <URL:https://www.sciencedirect.com/science/article/pii/S1474667015356536>
- PELLEGRINELLI STEFANIA ET AL: "Multi-robot spot-welding cells for car-body assembly: Design and motion planning", ROBOTICS AND COMPUTER INTEGRATED MANUFACTURING, ELSEVIER SCIENCE PUBLISHERS BV., BARKING, GB, vol. 44, 21 August 2016 (2016-08-21), pages 97 - 116, XP029830767, ISSN: 0736-5845, DOI: 10.1016/J.RCIM.2016.08.006

## Description

### Technical Field

The present disclosure relates to the field of battery manufacturing technologies, and in particular, to a post welding method and a post welding system.

### Background Art

New energy batteries are becoming increasingly widespread in life and industry. For example, new energy vehicles equipped with batteries have been widely used. In addition, batteries are also increasingly used in fields of energy storage and the like.

Generally, cell posts are welded to a busbar to assemble a plurality of cells into a battery module. However, if different types of battery modules are to be assembled, different programs need to be set in a welding device, resulting in a large program development amount and low cutting, pulling and model changing efficiency.
CN 115 241 587 A discloses a cell-replaceable battery PACK structure and an assembly and maintenance method thereof, and the cell-replaceable battery PACK structure comprises a first-stage PACK battery pack which is used for fixedly installing a cylindrical cell.

### Summary of the Invention

In order to solve the foregoing technical problems, it is desirable for embodiments of the present disclosure to provide a post welding method and a post welding system, to solve problems of a large program development amount and low cutting, pulling and model changing efficiency in the related art.

Technical solutions of the present disclosure are implemented as follows.

A post welding method, including: addressing, under a guidance based on product data of a product to be welded, at least one cell post in the product to be welded, to obtain an addressing coordinate set of the at least one cell post, where the product data represents a product structure of the product to be welded, and the addressing coordinate set of the at least one cell post represents a position of the at least one cell post in the product to be welded in a current environment; and determining a welding coordinate set of the at least one cell post based on the addressing coordinate set of the at least one cell post, to implement, based on the welding coordinate set of the at least one cell post, electrical connections between cells in the product to be welded.

It may be understood that addressing, under the guidance based on the product data of the product to be welded, the cell post in the product to be welded can automatically determine the addressing coordinate set of the cell post, to implement automatic addressing before welding. The welding coordinate set of the at least one cell post can be automatically determined based on the addressing coordinate set of the cell post, to implement automatic positioning of a welding point. In this way, no matter what product type of the product to be welded is, welding coordinates of each cell post in the product to be welded can be automatically determined based on the product data of the product to be welded, and only one set of programs, rather than different programs, needs to be written, so that the program development amount is small. In addition, since the welding coordinates of each cell post in the product to be welded are automatically determined based on the product data of the product to be welded, only the product, rather than the program, needs to be replaced during cutting, pulling and model changing on a production line, which brings high cutting, pulling and model changing efficiency.

In the foregoing solution, the addressing, under a guidance based on product data of a product to be welded, at least one cell post in the product to be welded, to obtain an addressing coordinate set of the at least one cell post includes: determining a photographing coordinate set of the at least one cell post based on a product structure diagram of the product to be welded, where the product data includes the product structure diagram; and photographing the at least one cell post based on the photographing coordinate set of the at least one cell post, to obtain the addressing coordinate set of the at least one cell post.

It may be understood that the photographing coordinate set of the cell post can be automatically determined based on the product structure diagram of the product to be welded, to implement automatic positioning of a photographing point of the cell post. Therefore, the addressing coordinates of the cell post can be automatically determined based on the photographing coordinate set of the cell post. In this way, automatic addressing before welding is implemented without an additional operation, so that efficiency of addressing before welding is improved.

In the foregoing solution, determining a photographing coordinate set of the at least one cell post based on a product structure diagram of the product to be welded includes: parsing the product structure diagram of the product to be welded, to obtain a text coordinate set of the at least one cell post; scanning the text coordinate set of the at least one cell post to obtain a row number and a column number that correspond to each of the at least one cell post; and generating the photographing coordinate set of the at least one cell post based on the row number and the column number that correspond to each cell post.

It may be understood that the product structure diagram of the product to be welded is scanned to obtain the row number and the column number that correspond to each cell post, and the photographing coordinate set of the at least one cell post is determined based on the row number and the column number that correspond to each cell post. In this way, automatic guidance and positioning for the photographing point can be implemented.

In the foregoing solution, determining a welding coordinate set of the at least one cell post based on the addressing coordinate set of the at least one cell post includes: allocating the at least one cell post to assemblies in a welding device based on the addressing coordinate set of the at least one cell post; and determining respective welding coordinate sets for the assemblies based on addressing coordinates of every preset quantity of cell posts in the addressing coordinate set of the at least one cell post, the welding coordinate sets for the assemblies representing the welding coordinate set of the at least one cell post; and N being an integer greater than or equal to 1.

It may be understood that the at least one cell post may be automatically allocated to the assemblies in the welding device based on the addressing coordinate set of the at least one cell post, to implement automatic allocation to the assemblies. In addition, the respective welding coordinate sets for the assemblies are determined based on the addressing coordinates of every preset quantity of cell posts, so that multiple-by-one welding can be implemented, which improves cell post welding efficiency.

In the foregoing solution, the welding device includes a first welding robot, a second welding robot, a first set of pressurization mechanisms, and a second set of pressurization mechanisms. The allocating the at least one cell post to assemblies in a welding device based on the addressing coordinate set of the at least one cell post includes: dividing the at least one cell post into a first cell post set and a second cell post set based on the addressing coordinate set of the at least one cell post; allocating the first cell post set to the first welding robot and the first set of pressurization mechanisms; and allocating the second cell post set to the second welding robot and the second set of pressurization mechanisms.

It may be understood that, based on the addressing coordinates of the at least one cell post, one part of the at least one cell post is allocated to the first welding robot and the first set of pressurization mechanisms, and the other part of the at least one cell post is allocated to the second welding robot and the second set of pressurization mechanisms. In this way, post welding efficiency can be improved.

In the foregoing solution, the first welding robot includes a first welding component, and the second welding robot includes a second welding component. Determining respective welding coordinate sets for the assemblies based on addressing coordinates of every preset quantity of cell posts in the addressing coordinate set of the at least one cell post includes: performing rotation and translation on addressing coordinates of each first cell post in the first cell post set to obtain processed addressing coordinates of each first cell post; determining a welding coordinate set for the first welding robot, a downward pressure coordinate set for the first set of pressurization mechanisms, and an offset set of the first welding component of the first welding robot under each set of welding coordinates based on processed addressing coordinates of every preset quantity of first cell posts; performing rotation and translation on addressing coordinates of each second cell post in the second cell post set to obtain processed addressing coordinates of each second cell post; and determining a welding coordinate set for the second welding robot, a downward pressure coordinate set for the second set of pressurization mechanisms, and an offset set of the second welding component of the second welding robot under each set of welding coordinates based on processed addressing coordinates of every preset quantity of second cell posts.

It may be understood that rotation and translation are performed on the addressing coordinates obtained through addressing before welding, to obtain addressing coordinates under a welding room, and then respective coordinates used by the assemblies during welding is determined based on the addressing coordinates under the welding room. In this way, post welding accuracy can be improved.

In the foregoing solution, determining a welding coordinate set for the first welding robot, a downward pressure coordinate set for the first set of pressurization mechanisms, and an offset set of the first welding component of the first welding robot under each set of welding coordinates based on processed addressing coordinates of every preset quantity of first cell posts includes: using the processed addressing coordinates of every preset quantity of first cell posts as downward pressure coordinates for the first set of pressurization mechanisms, to obtain the downward pressure coordinate set for the first set of pressurization mechanisms; using a central point of the processed addressing coordinates of every preset quantity of first cell posts as one set of welding coordinates for the first welding robot, to obtain the welding coordinate set for the first welding robot; and using offsets between the processed addressing coordinates of every preset quantity of first cell posts and the central point as offsets of the first welding component of the first welding robot under one set of welding coordinates, to obtain the offset set of the first welding component.

It may be understood that the welding coordinates for the first welding robot, the downward pressure coordinates for the first set of pressurization mechanisms, and the offsets of the first welding component of the first welding robot under each set of welding coordinates are determined based on the processed addressing coordinates of every preset quantity of first cell posts. In this way, multiple-by-one welding can be implemented, improving the post welding efficiency.

In the foregoing solution, the implementing, based on the welding coordinate set of the at least one cell post, electrical connections between cells in the product to be welded includes: determining a placement type of the product to be welded and a first fool-proofing condition; determining a first welding sequence of the first welding robot and a second welding sequence of the second welding robot based on the welding coordinate set of the at least one cell post, the placement type of the product to be welded, and the first fool-proofing condition; controlling the first welding robot to weld the first cell post set according to the first welding sequence; and controlling the second welding robot to weld the second cell post set according to the second welding sequence.

It may be understood that the welding sequence of each welding robot is first determined based on the first fool-proofing condition and the welding coordinates of the at least one cell, and then welding is performed. In this way, interference or even collisions between the two welding robots can be reduced during welding.

In the foregoing solution, the implementing, based on the welding coordinate set of the at least one cell post, electrical connections between cells in the product to be welded includes: when it is determined that current first welding coordinates for the first welding robot and current second welding coordinates for the second welding robot satisfy a second fool-proofing condition, controlling the first welding robot to weld a first cell post corresponding to the first welding coordinates; and controlling the second welding robot to weld a second cell post corresponding to the second welding coordinates.

It may be understood that fool-proofing determining is performed in real time during welding based on the welding coordinates for each welding robot and the second fool-proofing condition, so that adjustment can be performed in real time based on a current welding scenario, to achieve applicability to different products.

In the foregoing solution, the post welding method further includes: when it is determined that the first welding coordinates and the second welding coordinates do not satisfy the second fool-proofing condition, determining a welding sequence of the first welding robot and the second welding robot; and controlling, according to the welding sequence, the first welding robot to weld the first cell post corresponding to the first welding coordinates, and the second welding robot to weld the second cell post corresponding to the second welding coordinates.

It may be understood that in a case of a collision between the first welding robot and the second welding robot, one of the welding robots may perform welding first, and after the welding robot completes welding, the other welding robot performs welding. In this way, the collision can be avoided.

In the foregoing solution, determining a placement type of the product to be welded and a first fool-proofing condition includes: determining the first fool-proofing condition, a first quantity of cell posts included in a largest row of the product to be welded, and a second quantity of cell posts included in a largest column of the product to be welded; and determining, based on the first quantity and the second quantity, the placement type of the product to be welded.

It may be understood that determining the placement type of the product to be welded is for facilitating subsequent welding of the cell post.

In the foregoing solution, the post welding method further includes: setting a status value of the at least one cell post to a first identifier before photographing, where the first identifier represents that a corresponding cell post is not photographed; and setting the status value of the at least one cell post to a second identifier after photographing, where the second identifier represents that the corresponding cell post is already photographed.

It may be understood that setting the status value of the cell post can help to obtain a cell post that is not photographed and a cell post that is already photographed, to ensure that all cell posts are already photographed and prevent any cell post from being missed.

In the foregoing solution, the first fool-proofing condition is that the first welding robot is spaced from the second welding robot by a first safety distance during welding. The second fool-proofing condition is that the first welding robot is spaced from the second welding robot by a second safety distance during welding.

A post welding system is provided, which includes a controller and a welding device. The controller is configured to address, under a guidance based on product data of a product to be welded, at least one cell post in the product to be welded, to obtain an addressing coordinate set of the at least one cell post, where the product data represents a product structure of the product to be welded, and the addressing coordinate set of the at least one cell post represents a position of the at least one cell post in the product to be welded in a current environment. The controller is further configured to determine a welding coordinate set of the at least one cell post based on the addressing coordinate set of the at least one cell post. The welding device is configured to weld the at least one cell post based on the welding coordinate set of the at least one cell post, to implement electrical connections between cells in the product to be welded.

It may be understood that addressing, under the guidance based on the product data of the product to be welded, the cell post in the product to be welded can automatically determine the addressing coordinate set of the cell post, to implement automatic addressing before welding. The welding coordinate set of the at least one cell post can be automatically determined based on the addressing coordinate set of the cell post, to implement automatic positioning of a welding point. In this way, no matter what product type of the product to be welded is, welding coordinates of each cell post in the product to be welded can be automatically determined based on the product data of the product to be welded, and only one set of programs, rather than different programs, needs to be written, so that a program development amount is small. In addition, since the welding coordinates of each cell post in the product to be welded are automatically determined based on the product data of the product to be welded, only the product, rather than the program, needs to be replaced during cutting, pulling and model changing on a production line, which brings high cutting, pulling and model changing efficiency.

In the foregoing solution, the welding device includes a first welding robot, a second welding robot, a first set of pressurization mechanisms, and a second set of pressurization mechanisms. The controller is further configured to divide the at least one cell post into a first cell post set and a second cell post set, allocate the first cell post set to the first welding robot and the first set of pressurization mechanisms, and allocate the second cell post set to the second welding robot and the second set of pressurization mechanisms.

It may be understood that the controller can also implement automatic division of the cell post in the product to be welded, so that post welding efficiency is improved.

In the foregoing solution, the first welding robot includes a first welding component, and the second welding robot includes a second welding component. The controller is further configured to determine a welding coordinate set for the first welding robot, a downward pressure coordinate set for the first set of pressurization mechanisms, and an offset set of the first welding component of the first welding robot under each set of welding coordinates based on addressing coordinates of every preset quantity of first cell posts in the first cell post set. The controller is further configured to determine a welding coordinate set for the second welding robot, a downward pressure coordinate set for the second set of pressurization mechanisms, and an offset set of the second welding component of the second welding robot under each set of welding coordinates based on addressing coordinates of every preset quantity of second cell posts in the second cell post set.

It may be understood that the controller can automatically determine the welding coordinates for each welding component, so that addressing efficiency is improved.

In the foregoing solution, the first welding robot is configured to weld every preset quantity of first cell posts after the first set of pressurization mechanisms pressurizes every preset quantity of first cell posts and a first welding material. The second welding robot is configured to weld every preset quantity of second cell posts after the second set of pressurization mechanisms pressurizes every preset quantity of second cell posts and a second welding material.

It may be understood that the pressurization mechanisms are used to pressurize the cell post and the welding materials, so that welding accuracy can be improved.

In the foregoing solution, the first welding robot is further configured to drive, based on the offset set of the first welding component, the first welding component to weld every preset quantity of first cell posts. The second welding robot is further configured to drive, based on the offset set of the second welding component, the second welding component to weld every preset quantity of second cell posts.

It may be understood that multiple-by-one welding, for example, four-by-one welding or eight-by-one welding, can be implemented based on the offsets of the welding components.

In the foregoing solution, the first set of pressurization mechanisms and the second set of pressurization mechanisms are adapted to post spacings of different products. The first set of pressurization mechanisms and the second set of pressurization mechanisms each include a preset quantity of pressurizers. It may be understood that the pressurization mechanisms may be controlled based on the welding coordinates of the cell post to perform servo pitch changing, for adaptation to cell spacings of different products.

According to the post welding method and the post welding system provided in the embodiments of the present disclosure, the at least one cell post in the product to be welded may be addressed under the guidance based on the product data of the product to be welded, to obtain the addressing coordinate set of the at least one cell post, and the welding coordinate set of the at least one cell post is determined based on the addressing coordinate set of the at least one cell post, to implement, based on the welding coordinate set of the at least one cell post, electrical connections between the cells in the product to be welded. In this way, addressing, under the guidance based on the product data of the product to be welded, the cell post in the product to be welded can automatically determine the addressing coordinate set of the cell post, to implement automatic addressing before welding. The welding coordinate set of the at least one cell post can be automatically determined based on the addressing coordinate set of the cell post, to implement automatic positioning of a welding point. In this way, no matter what product type of the product to be welded is, welding coordinates of each cell post in the product to be welded can be automatically determined based on the product data of the product to be welded, and only one set of programs, rather than different programs, needs to be written, so that a program development amount is small. In addition, since the welding coordinates of each cell post in the product to be welded are automatically determined based on the product data of the product to be welded, only the product, rather than the program, needs to be replaced during cutting, pulling and model changing on a production line, which brings high cutting, pulling and model changing efficiency.

### Brief Description of the Drawings

FIG. 1 is a schematic flowchart of a post welding method according to an embodiment of the present disclosure;
FIG. 2 is a schematic flowchart of another post welding method according to an embodiment of the present disclosure;
FIG. 3 is a schematic diagram of a structure of a welding device according to an embodiment of the present disclosure;
FIG. 4 is a schematic diagram of a structure of a six-axis robot according to an embodiment of the present disclosure; and
FIG. 5 is a schematic diagram of a structure of a laser galvanometer according to an embodiment of the present disclosure.

Reference signs in the Detailed Description of Embodiments are as follows: welding device 30, first welding robot 31, second welding robot 32, first set of pressurization mechanisms 33, second set of pressurization mechanisms 34, first welding component 35, second welding component 36, six-axis robot 40, shaft body 41, camera module 42, laser galvanometer 5, visual acquisition system 50, and ranging sensor 51.

### Detailed Description of Embodiments

The following clearly and completely describes the technical solutions in the embodiments of the present disclosure with reference to the accompanying drawings in the embodiments of the present disclosure.

It should be understood that "embodiment of the present disclosure" or "the foregoing embodiment" mentioned throughout the specification means that specified features, structures, or characteristics related to the embodiment are included in at least one embodiment of the present disclosure. Therefore, "in the embodiment of the present disclosure" or "in the foregoing embodiment" appearing throughout the specification does not necessarily refer to a same embodiment. In addition, these specified features, structures, or characteristics may be combined in one or more embodiments in any appropriate manner. In the embodiments of the present disclosure, sequence numbers of the foregoing processes do not mean execution sequences. The execution sequences of the processes should be determined according to functions and internal logic of the processes, and should not be construed as any limitation on implementation processes of the embodiments of the present disclosure. The sequence numbers of the embodiments of the present disclosure are only for description, and do not represent superiority or inferiority of the embodiments.

Unless otherwise specified, that an electronic device performs any step in the embodiments of the present disclosure may be that a processor of the electronic device performs the step. It is also worthy noting that a sequence in which the electronic device performs the following steps is not limited in the embodiments of the present disclosure. In addition, data processing manners used in different embodiments may be the same or different. It should also be noted that any step in the embodiments of the present disclosure may be independently performed by the electronic device, that is, the electronic device may perform any step in the following embodiments independent of performing of another step.

It should be understood that the specific embodiments described here are merely intended to explain the present disclosure, and are not intended to limit the present disclosure.

In the embodiments of the present disclosure, a battery may be a single physical module including one or more battery cells to provide a higher voltage and capacity. When there are a plurality of battery cells, the plurality of battery cells are connected in series, in parallel, or in both series and parallel through a busbar component.

The following first describes a post welding solution in the prior art, to better understand a post welding method provided in the embodiments of the present disclosure.

Welding means fusing a busbar (also referred to as a bus plate) placed on a cell with the cell by using laser or other energy, to implement series/parallel connection between cells. In addition, a third-party material is not required to be added during welding. Because different products include different quantities of rows and columns of cells at different spacings, and a same product may also include cells at different spacings, a guidance to a welding position needs to be provided through welding coordinates during welding. For example, the welding coordinates are used for a guidance to the welding position during non-contact welding with a galvanometer.

Different products (for example, a battery module and a battery pack) are different in sizes, appearance, welding requirements (for example, power and defocus amount), welding coordinates, and the like, and consequently, different programs need to be written during welding of different products, leading to problems of a large program development amount and a high error rate.

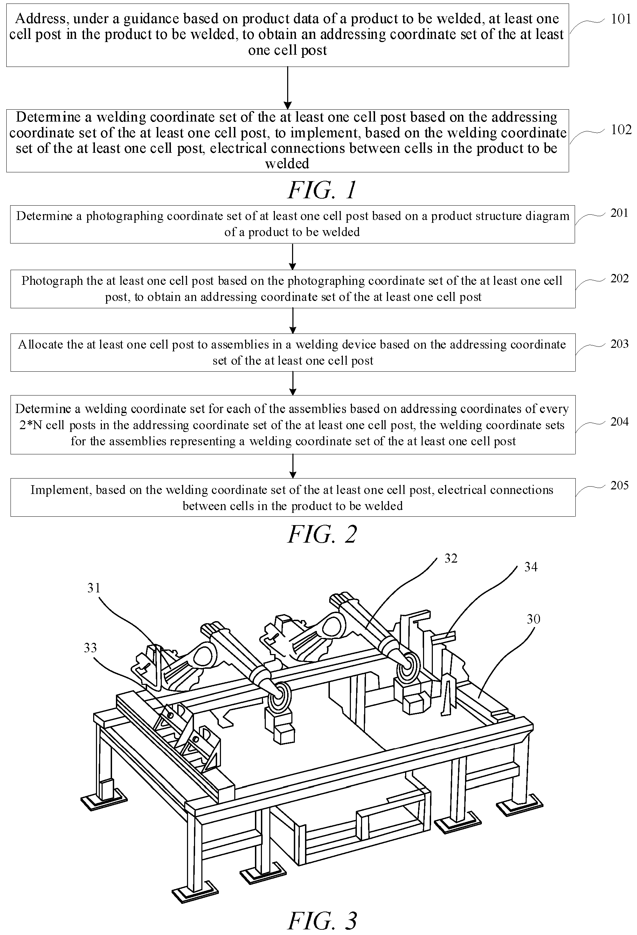

To this end, an embodiment of the present disclosure provides a post welding method. The method may be applied to a controller of a post welding system. The controller may be any one of a programmable logic controller (PLC), a single-chip microcomputer, an intermediary computer, and a host computer. As shown in FIG. 1, the method includes the following step 101 and step 102.

Step 101: Address, under a guidance based on product data of a product to be welded, at least one cell post in the product to be welded, to obtain an addressing coordinate set of the at least one cell post.

The product data represents a product structure of the product to be welded. The addressing coordinate set of the at least one cell post represents a position of the at least one cell post in the product to be welded in a current environment. In the present disclosure, addressing means detecting a position of each cell post in the product to be welded, and addressing coordinates are detected position coordinates of each cell post.

Here, the product to be welded may be a product currently required to be welded. The product to be welded may be one product required to be welded or a plurality of products required to be welded. Further, the product to be welded may be a plurality of products of a same type, or may be a plurality of products of different types. This is not limited in this embodiment of the present disclosure. Exemplarily, the product may include but is not limited to a battery pack, a battery module, and a plurality of cells. The product data of the product to be welded may be data capable of representing the product structure of the product to be welded. In a feasible implementation, the product data of the product to be welded may be a product structure diagram of the product to be welded. The product to be welded may include the at least one cell post. The cell post may refer to a part where a positive electrode and a negative electrode inside a battery are connected to an external circuit. The cell post may be made of a metallic material, for example, lithium cobalt oxide or graphite. The addressing coordinate set of the at least one cell post is used for representing the position of the at least one cell post in the product to be welded in the current environment. Generally, the addressing coordinate set of the at least one cell post may refer to a position of the at least one cell post in the product to be welded in an actual production environment. For example, the addressing coordinate set may indicate a position of the cell post in the product to be welded at a welding station. The addressing coordinate set of the at least one cell post includes addressing coordinates of each of the at least one cell post. The addressing coordinates of any one cell post represents a position of the cell post in the product to be welded in the current environment.

Addressing, under the guidance based on the product data of the product to be welded, the at least one cell post in the product to be welded to obtain the addressing coordinate set of the at least one cell post means addressing, under the guidance based on the product data of the product to be welded, the cell post in the product to be welded to automatically determine the addressing coordinate set of the cell post, to implement automatic addressing before welding.

In a feasible implementation, in response to an addressing station, the controller may first determine, based on the product data of the product to be welded, a photographing point for the product to be welded, and then determine the addressing coordinate set of the at least one cell post based on the photographing point.

Step 102: Determine a welding coordinate set of the at least one cell post based on the addressing coordinate set of the at least one cell post, to implement, based on the welding coordinate set of the at least one cell post, electrical connections between cells in the product to be welded.

Here, the welding coordinate set of the at least one cell post is used for representing a welding position of the at least one cell post. The welding coordinate set of the at least one cell post may include welding coordinates of each of the at least one cell post. The welding coordinates of any one cell post represent a welding position of the cell post. After the at least one cell post is welded based on the welding coordinate set of the at least one cell post, electrical connections between the cells in the product to be welded may be implemented, to form a required battery pack, battery module, or the like.

Determining the welding coordinate set of the at least one cell post based on the addressing coordinate set of the at least one cell post means automatically determining the welding coordinate set of the cell post based on the addressing coordinate set obtained through addressing before welding, to implement automatic positioning of a welding point.

In a feasible implementation, the product to be welded is generally addressed at the addressing station and welded at the welding station. Transportation of the product to be welded from the addressing station to the welding station may cause a position offset. Therefore, after the addressing coordinate set of the at least one cell post is determined, rotation and translation need to be performed on the addressing coordinate set of the at least one cell post at the addressing station, to determine the welding coordinate set of the at least one cell post at the welding station.

It may be understood that addressing, under the guidance based on the product data of the product to be welded, the cell post in the product to be welded can automatically determine the addressing coordinate set of the cell post, to implement automatic addressing before welding. The welding coordinate set of the at least one cell post can be automatically determined based on the addressing coordinate set of the cell post, to implement automatic positioning of a welding point. In this way, no matter what product type of the product to be welded is, welding coordinates of each cell post in the product to be welded can be automatically determined based on the product data of the product to be welded, and only one set of programs, rather than different programs, needs to be written, so that a program development amount is small. In addition, since the welding coordinates of each cell post in the product to be welded are automatically determined based on the product data of the product to be welded, only the product, not a program, needs to be replaced during cutting, pulling and model changing on a production line, which brings high cutting, pulling and model changing efficiency and solves problems of a large program development amount and low cutting, pulling and model changing efficiency in the related art.

In some embodiments, step 101 may be implemented through the following step 1011 and step 1012.

Step 1011: Determine a photographing coordinate set of the at least one cell post based on a product structure diagram of the product to be welded, where the product data includes the product structure diagram.

Here, the product structure diagram of the product to be welded may be a two-dimensional product structure diagram, a three-dimensional product structure diagram, a multidimensional product structure diagram based on three-dimensional evolution, or the like of the product to be welded. Exemplarily, the product data of the product to be welded may be a computer aided diagnosis (CAD) diagram of the product to be welded. The photographing coordinate set of the at least one cell post is used to photograph the cell post. The photographing coordinate set of the at least one cell post includes photographing coordinates of each of the at least one cell post. One cell may include a plurality of cell posts. During implementation, a plurality of cell posts in a cell may correspond to one set of photographing coordinates, or may correspond to a plurality of sets of photographing coordinates. This is not limited in this embodiment of the present disclosure.

In a feasible implementation, the product structure diagram of the product to be welded includes a position of each cell in the product to be welded and a position of a cell post in each cell. Therefore, the position of the cell post in the product structure diagram of the product to be welded may be analyzed to determine the photographing coordinate set of the at least one cell post.

Step 1012: Photograph the at least one cell post based on the photographing coordinate set of the at least one cell post, to obtain the addressing coordinate set of the at least one cell post.

If one cell includes two cell posts, and the two cell posts in the one cell correspond to one set of photographing coordinates, photographing the at least one cell post based on the photographing coordinate set of the at least one cell post means photographing the at least one cell post based on photographing coordinates of a cell corresponding to every two cell posts. In this case, the quantity of cells is the same as the quantity of photographing times. In this way, the addressing coordinates of the cell post in the current environment can be obtained. Further, each cell may be photographed twice, so that an error caused by photographing once can be reduced, and more accurate addressing coordinates can be determined.

During implementation, the at least one cell post may be photographed by two two-dimensional (2D) cameras, to ensure that each cell post can be photographed. Further, the at least one cell post may be photographed by two 2D cameras and one three-dimensional (3D) profilometer. This considers not only a position of the cell post in a horizontal direction but also a position of the cell post in a vertical (height) direction. The two 2D cameras are configured to obtain coordinates (x, y) of the cell post in the horizontal direction. The 3D profilometer is configured to obtain a height z of the cell post in the vertical direction. Alternatively, the at least one cell post may be photographed by a camera module consisting of a 3D camera and a 3D profilometer, to further improve efficiency of addressing before welding.

Specifically, a welding device is configured to weld the cell post in the product to be welded. A welding device 30 may include a six-axis robot 40. The six-axis robot 40 may include a shaft body 41 (also referred to as a mechanical arm) and a camera module 42 connected to the shaft body 41. The camera module 42 may include a 2D camera and a 3D profilometer. A distance between two camera modules may be found through modelling in an early stage of photographing. In this way, if position coordinates of one camera module is known, position coordinates of the other camera module can be obtained. After the photographing coordinates of the at least one cell post are obtained, the mechanical arm may be controlled to move the camera module to the photographing coordinates of each cell to perform photographing, to obtain the addressing coordinate set of the at least one cell post. When there is data missing or an error in addressing coordinates of the cell post obtained by first photographing, addressing coordinates of the cell post obtained by second photographing can be used for detecting missing data and filling in the missing data, to ensure that the addressing coordinates of each cell post can be accurately obtained.

It may be understood that the photographing coordinate set of the cell post can be automatically determined based on the product structure diagram of the product to be welded, to implement automatic positioning of a photographing point of the cell post. Further, the addressing coordinates of the cell post can be automatically determined based on the photographing coordinate set of the cell post. In this way, automatic addressing before welding is implemented without an additional operation, so that efficiency of addressing before welding is improved.

Further, in another embodiment, a status value representing whether the cell post is already photographed may be set. Specifically, a status value of the at least one cell post is set to a first identifier before photographing. The first identifier represents that a corresponding cell post is not photographed. The status value of the at least one cell post is set to a second identifier after photographing. The second identifier represents that the corresponding cell post is already photographed.

Here, after any one cell post is photographed, a status value of the cell post may be updated from the first identifier to the second identifier, to represent that the cell post is already photographed. Therefore, through the status value, a cell post that is not photographed and a cell post that is already photographed can be obtained, to ensure that all cell posts are already photographed and prevent any cell post from being missed.

In some embodiments, "determining the welding coordinate set of the at least one cell post based on the addressing coordinate set of the at least one cell post" in step 102 may be implemented through the following step 1021 and step 1022.

Step 1021: Allocate the at least one cell post to assemblies in a welding device based on the addressing coordinate set of the at least one cell post.

Here, the welding device may include a welding robot, a pressurization mechanism, a welding component, and another assemblies. The pressurization mechanism may be a copper nozzle mechanism. The welding component may be a galvanometer. In a feasible implementation, the welding device 30 may include two welding robots: a first welding robot 31 and a second welding robot 32, and two sets of pressurization mechanisms: a first set of pressurization mechanisms 33 and a second set of pressurization mechanisms 34. A first welding component 35 is disposed on the first welding robot. A second welding component 36 is disposed on the second welding robot 32.

In a feasible implementation, the at least one cell post may be allocated to the assemblies in the welding device based on a distribution of the cell post in the product to be welded and the addressing coordinate set of the at least one cell post.

Step 1022: Determine respective welding coordinate sets for the assemblies based on addressing coordinates of every preset quantity of cell posts in the addressing coordinate set of the at least one cell post, the welding coordinate sets for the assemblies representing the welding coordinate set of the at least one cell post; and N being an integer greater than or equal to 1.

Here, the respective welding coordinate sets for the assemblies are determined based on the addressing coordinates of every preset quantity of cell posts because a preset quantity of cell posts may be welded at a time. The welding coordinate sets for the assemblies may include welding coordinates for each assembly during one-time welding. The welding coordinates during one-time welding may represent welding coordinates of a preset quantity of corresponding cell posts. The preset quantity may be preset. The preset quantity may be 2*N. Exemplarily, the preset quantity may be 4, 6, or 8.

In a feasible implementation, if four cell posts may be welded at a time, N is 2. In this case, the respective welding coordinate sets for the assemblies are determined based on addressing coordinates of every four cell posts, and the welding coordinates during one-time welding may represent welding coordinates of four corresponding cell posts. If eight cell posts can be welded at a time, N is 4. In this case, the respective welding coordinate sets for the assemblies are determined based on addressing coordinates of every eight cell posts, and the welding coordinates during one-time welding may represent welding coordinates of eight corresponding cell posts.

It may be understood that the at least one cell post may be automatically allocated to the assemblies in the welding device based on the addressing coordinate set of the at least one cell post, to implement automatic allocation to the assemblies. In addition, the respective welding coordinate sets for the assemblies are determined based on the addressing coordinates of every preset quantity of cell posts, so that multiple-by-one welding can be implemented, which improves cell post welding efficiency.

Based on the foregoing embodiment, an embodiment of the present disclosure provides another post welding method, applied to a controller of a post welding system. As shown in FIG. 2, the method includes the following step 201 to step 205.

Step 201: Determine a photographing coordinate set of the at least one cell post based on a product structure diagram of the product to be welded.

The product data includes the product structure diagram.

In a feasible implementation, the photographing coordinate set of the at least one cell post may be determined based on the product structure diagram of the product to be welded and a current position of the product to be welded.

Step 202: Photograph the at least one cell post based on the photographing coordinate set of the at least one cell post, to obtain the addressing coordinate set of the at least one cell post.

Here, step 201 and step 202 correspond to step 1011 and step 1012, respectively. During implementation, reference may be made to specific implementations of step 1011 and step 1012.

Step 203: Allocate the at least one cell post to assemblies in a welding device based on the addressing coordinate set of the at least one cell post.

Step 204: Determine respective welding coordinate sets for the assemblies based on addressing coordinates of every preset quantity of cell posts in the addressing coordinate set of the at least one cell post, the welding coordinate sets for the assemblies representing the welding coordinate set of the at least one cell post.

Here, step 203 and step 204 correspond to step 1021 and step 1022, respectively. During implementation, reference may be made to specific implementations of step 1021 and step 1022.

Step 205: Implement, based on the welding coordinate set of the at least one cell post, electrical connections between cells in the product to be welded.

In some embodiments, step 201 may be implemented through the following step 2011 to step 2013.

Step 2011: Parse the product structure diagram of the product to be welded, to obtain a text coordinate set of the at least one cell post.

Here, the text coordinate set of the at least one cell post is a text representation of the product structure diagram of the product to be welded, and is used for representing a position of the at least one cell post in the product structure diagram. In a feasible implementation, the product structure diagram may be a CAD diagram. Therefore, the CAD diagram of the product to be welded is parsed to obtain the text coordinate set of the at least one cell post.

Step 2012: Scan the text coordinate set of the at least one cell post to obtain a row number and a column number that correspond to each of the at least one cell post.

Here, the row number and the column number that correspond to each cell post may represent an arrangement of each cell post. In a feasible implementation, the text coordinate set of the at least one cell post may be scanned with a first post at the left bottom of each battery pack as an origin, to obtain the row number and the column number that correspond to each of the at least one cell post. The intersection of the row and the column is position coordinates of the cell post.

Step 2013: Generate the photographing coordinate set of the at least one cell post based on the row number and the column number that correspond to each cell post.

Generally, each cell in the product to be welded needs to be photographed. Therefore, during implementation, a position of each of the at least one cell post may be determined based on the row number and the column number that correspond to each cell post, and then the photographing coordinate set of the at least one cell post may be determined based on the position of each of the at least one cell post and the current position of the product to be welded. Specifically, a position of a first cell post in the product to be welded in an actual environment may be used as a reference point, and then a middle position between two cell posts in each cell may be determined as a photographing point (photographing coordinates) of the cell, to obtain the photographing coordinate set of the at least one cell post.

It may be understood that the product structure diagram of the product to be welded is scanned to obtain the row number and the column number that correspond to each cell post, and the photographing coordinate set of the at least one cell post is determined based on the row number and the column number that correspond to each cell post. In this way, automatic guidance and positioning for the photographing point can be implemented.

In some embodiments, the welding device 30 includes the first welding robot 31, the second welding robot 32, the first set of pressurization mechanisms 33, and the second set of pressurization mechanisms 34. Step 203 may be implemented through the following step 2031 to step 2033.

Step 2031: Divide the at least one cell post into a first cell post set and a second cell post set based on the addressing coordinate set of the at least one cell post.

Here, the at least one cell post is divided into the first cell post set and the second cell post set, to improve post welding efficiency.

In a feasible implementation, when the welding device 30 includes two welding robots: the first welding robot 31 and the second welding robot 32, the at least one cell post may be equally divided based on the addressing coordinates of the at least one cell post. Specifically, the at least one cell post may be equally divided based on positions of the first welding robot 31 and the second welding robot 32. Exemplarily, if the first welding robot 31 and the second welding robot 32 are arranged on the left and the right respectively, a cell post on the left half is grouped into the first cell post set, and a cell post on the right half is grouped into the second cell post set. For another example, if the first welding robot 31 and the second welding robot 32 are arranged at upper and lower parts respectively, a cell post on the upper half is grouped into the first cell post set, and a cell post on the lower half is grouped into the second cell post set. When the at least one cell post cannot be equally divided, a cell post in an extra column may be allocated to the first welding robot 31 (or the second welding robot 32), or a cell post in an extra row may be allocated to the first welding robot 31 (or the second welding robot 32).

Step 2032: Allocate the first cell post set to the first welding robot and the first set of pressurization mechanisms.

Generally, a welding robot is used in conjunction with a pressurization mechanism, and the pressurization mechanism pressurizes the cell post to tightly attach the cell post to a bus plate, to achieve higher welding accuracy. In a feasible implementation, in a four-by-one welding scenario, the first set of pressurization mechanisms 33 and the second set of pressurization mechanisms 34 may each be four sets of copper nozzle mechanisms.

In a feasible implementation, the first cell post set may be cell posts close to the first welding robot 31.

Step 2033: Allocate the second cell post set to the second welding robot and the second set of pressurization mechanisms.

In a feasible implementation, the second cell post set may be cell posts close to the second welding robot 32.

It may be understood that, based on the addressing coordinates of the at least one cell post, one part of the at least one cell post is allocated to the first welding robot 31 and the first set of pressurization mechanisms 33, and the other part of the at least one cell post is allocated to the second welding robot 32 and the second set of pressurization mechanisms 34. In this way, post welding efficiency can be improved.

In some embodiments, the first welding robot 31 includes the first welding component 35, and the second welding robot 32 includes the second welding component 36. Step 204 may be implemented through the following step 2041 to step 2044.

Step 2041: Perform rotation and translation on addressing coordinates of each first cell post in the first cell post set to obtain processed addressing coordinates of each first cell post.

Generally, the addressing coordinates are for use at the welding station, and a cell module may be pulled to the welding station by an automated guided vehicle (AGV), with a direction offset in this process. Therefore, an offset needs to be calculated to convert addressing coordinates before welding to addressing coordinates under a welding room through rotation and translation. In a feasible implementation, rotation and translation may be performed on the addressing coordinates of each first cell post in the first cell post set through trigonometric function coordinate system rotation, to obtain the processed addressing coordinates of each first cell post.

In some implementations, marked point addressing coordinates corresponding to at least two marked points in the addressing coordinate set at the addressing station may be determined. Marked point welding coordinates of the at least two marked points in the welding coordinate set at the welding station are determined. A conversion parameter between the addressing station and the welding station is determined based on the marked point addressing coordinates and the marked point welding coordinates. Rotation and translation are performed on the addressing coordinate set of the at least one cell post based on the conversion parameter, to obtain the welding coordinate set of the at least one cell post at the welding station.

Step 2042: Determine a welding coordinate set for the first welding robot, a downward pressure coordinate set for the first set of pressurization mechanisms, and an offset set of the first welding component of the first welding robot under each set of welding coordinates based on processed addressing coordinates of every preset quantity of first cell posts.

During each time of welding, the welding robot needs to be moved to a welding position, then the pressurization mechanisms applies downward pressure based on the position of the cell post, to tightly attach the cell post to the bus plate, and then the cell post is actually welded based on an offset of the welding component. Four-by-one welding means that the welding robot may weld four cell posts when moving once. Therefore, a welding position of the welding robot, a downward pressure position of the pressurization mechanisms, four offsets of the welding component, and the like need to be known, to implement four-by-one welding.

In an implementation, a specific implementation of step 2042 may be: using the processed addressing coordinates of every preset quantity of first cell posts as downward pressure coordinates for the first set of pressurization mechanisms, to obtain the downward pressure coordinate set for the first set of pressurization mechanisms; using a central point of the processed addressing coordinates of every preset quantity of first cell posts as one set of welding coordinates for the first welding robot, to obtain the welding coordinate set for the first welding robot; and using offsets between the processed addressing coordinates of every preset quantity of first cell posts and the central point as offsets of the first welding component of the first welding robot under one set of welding coordinates, to obtain the offset set of the first welding component.

In a feasible implementation, when N is 2, that is, in a case of four-by-one welding, processed addressing coordinates of every four first cell posts may be determined as downward pressure coordinates for the first set of pressurization mechanisms 33, to obtain the downward pressure coordinate set of the first set of pressurization mechanisms 33. A central point of the processed addressing coordinates of every four first cell posts is determined as one set of welding coordinates for the first welding robot 31, to obtain the welding coordinate set for the first welding robot 31. Offsets between the processed addressing coordinates of every four first cell posts and the central point are used as four offsets of the first welding component 35 of the first welding robot 31 under one set of welding coordinates, to obtain the offset set of the first welding component 35.

It may be understood that the welding coordinates for the first welding robot 31, the downward pressure coordinates for the first set of pressurization mechanisms 33, and the offsets of the first welding component 35 of the first welding robot 31 under each set of welding coordinates are determined based on the processed addressing coordinates of every preset quantity of first cell posts. In this way, multiple-by-one welding can be implemented, improving the post welding efficiency.

Step 2043: Perform rotation and translation on addressing coordinates of each second cell post in the second cell post set to obtain processed addressing coordinates of each second cell post.

It should be noted that an operation in step 2043 is similar to that in step 2041. During implementation, reference may be made to specific implementations of step 2041. Specifically, rotation and translation may be performed on the addressing coordinates of each second cell post through trigonometric function coordinate system rotation, to obtain the processed addressing coordinates of each second cell post.

Step 2044: Determine a welding coordinate set for the second welding robot, a downward pressure coordinate set for the second set of pressurization mechanisms, and an offset set of the second welding component of the second welding robot under each set of welding coordinates based on processed addressing coordinates of every preset quantity of second cell posts.

It should be noted that an operation in step 2044 is similar to that in step 2042. During implementation, reference may be made to specific implementations of step 2042. Specifically, the processed addressing coordinates of every preset quantity of second cell posts are used as downward pressure coordinates for the second set of pressurization mechanisms 34, to obtain the downward pressure coordinate set for the second set of pressurization mechanisms 34. A central point of the processed addressing coordinates of every preset quantity of second cell posts is used as one set of welding coordinates for the second welding robot 32, to obtain the welding coordinate set for the second welding robot 32. Offsets between the processed addressing coordinates of every preset quantity of second cell posts and the central point are used as offsets of the second welding component 36 of the second welding robot 32 under one set of welding coordinates, to obtain the offset set of the second welding component 36.

It may be understood that rotation and translation are performed on the addressing coordinates obtained through addressing before welding, to obtain addressing coordinates under a welding room, and then respective coordinates used by the assemblies during welding is determined based on the addressing coordinates under the welding room. In this way, post welding accuracy can be improved.

In some embodiments, step 205 may be implemented through the following step 2051 to step 2054.

Step 2051: Determine a placement type of the product to be welded and a first fool-proofing condition.

Here, the placement type includes a horizontal placement type and a vertical placement type. The first fool-proofing condition is used to evaluate whether the two welding robots may collide during welding. In a feasible implementation, the first fool-proofing condition may be that the first welding robot is spaced from the second welding robot by a first safety distance during welding. The first safety distance may be preset. The first safety distance may be set to a distance between three adjacent cell posts. The first fool-proofing condition may be set based on an actual service scenario. This is not limited in this embodiment of the present disclosure.

In an implementation, a specific implementation of step 2051 may be: determining the first fool-proofing condition, a first quantity of cell posts included in a largest row of the product to be welded, and a second quantity of cell posts included in a largest column of the product to be welded; and determining, based on the first quantity and the second quantity, the placement type of the product to be welded.

Here, the first quantity is the quantity of cell posts included in the largest row. The largest row is a row including a maximum quantity of cell posts in the product to be welded. The second quantity is the quantity of cell posts included in the largest column. The largest column is a column including a maximum quantity of cell posts in the product to be welded.

In a feasible implementation, when the first quantity is greater than or equal to the second quantity, it is determined that the placement type of the product to be welded is horizontal placement; or when the first quantity is less than the second quantity, it is determined that vertical placement is used for the product to be welded.

It may be understood that determining the placement type of the product to be welded is for facilitating subsequent welding of the cell post.

Step 2052: Determine a first welding sequence of the first welding robot and a second welding sequence of the second welding robot based on the welding coordinate set of the at least one cell post, the placement type of the product to be welded, and the first fool-proofing condition.

Here, the welding robot includes a galvanometer, a camera, a protective cover, and another assembly. During welding, if the two welding robots are close, there may be interference between the two welding robots. Therefore, a welding sequence of each welding robot may be first determined, and then welding is performed. The placement type of the product to be welded is for determining whether to perform welding in sequence by column or perform welding in sequence by row. Determining the first welding sequence of the first welding robot 31 and the second welding sequence of the second welding robot 32 based on the welding coordinate set of the at least one cell post, the placement type of the product to be welded, and the first fool-proofing condition is actually determining the welding sequence of each welding robot in advance based on respective coordinates for the assemblies corresponding to the at least one cell post and the first fool-proofing condition, to prevent interference between the assemblies.

In an implementation, a plurality of columns of cell posts or a plurality of rows of cell posts corresponding to each of the first welding robot 31 and the second welding robot 32 may be determined based on the placement type. A welding sequence of the plurality of columns of cell posts corresponding to each of the first welding robot 31 and the second welding robot 32 is determined based on the first fool-proofing condition and welding coordinates of cell posts in each column (or welding coordinates of cell posts in each row), to obtain the first welding sequence and the second welding sequence.

Specifically, when the placement type is vertical placement, the plurality of columns of cell posts corresponding to each of the first welding robot 31 and the second welding robot 32 may be determined. In this case, the first cell post set corresponding to the first welding robot 31 may be a plurality of columns of cell posts on the left half, and the second cell post set corresponding to the second welding robot 32 may be a plurality of columns of cell posts on the right half. When the placement type is horizontal placement, the plurality of rows of cell posts corresponding to each of the first welding robot 31 and the second welding robot 32 may be determined. In this case, the first cell post set corresponding to the first welding robot 31 may be a plurality of rows of cell posts on the upper half, and the second cell post set corresponding to the second welding robot 32 may be a plurality of rows of cell posts on the lower half.

Specifically, a column welding sequence corresponding to the first welding robot 31 and a column welding sequence corresponding to the second welding robot 32 are determined based on the first fool-proofing condition and welding coordinates of cell posts in each column. The first welding sequence is obtained based on the column welding sequence corresponding to the first welding robot 31 and a welding sequence of the cell posts in each column. The second welding sequence is obtained based on the column welding sequence corresponding to the second welding robot 32 and a welding sequence of the cell posts in each column.

During implementation, if the first fool-proofing condition is that the two welding robots are spaced by the distance between three adjacent cell posts during welding, the plurality of columns of cell posts corresponding to the first welding robot 31 remain the distance between three adjacent cell posts from the plurality of columns of cell posts corresponding to the second welding robot 32 during welding.

Step 2053: Control the first welding robot to weld the first cell post set according to the first welding sequence.

Step 2054: Control the second welding robot to weld the second cell post set according to the second welding sequence.

It may be understood that the welding sequence of each welding robot is first determined based on the first fool-proofing condition and the welding coordinates of the at least one cell, and then welding is performed. In this way, interference or even collisions between the two welding robots can be reduced during welding.

In another embodiment, step 205 may alternatively be implemented through the following step A to step D.

Step A: When it is determined that current first welding coordinates for the first welding robot and current second welding coordinates for the second welding robot satisfy a second fool-proofing condition, control the first welding robot to weld a first cell post corresponding to the first welding coordinates.

Here, the second fool-proofing condition is used to perform fool-proofing determining in real time. It should be noted that the first fool-proofing condition and the second fool-proofing condition may be the same or different, which may specifically be set based on an actual service scenario. In a feasible implementation, the second fool-proofing condition may be that the first welding robot is spaced from the second welding robot by a second safety distance during welding. The second safety distance may be preset. The second safety distance may be set to a distance between three adjacent cell posts. The first welding coordinates may be current welding coordinates for the first welding robot 31. The second welding coordinates may be current welding coordinates for the second welding robot 32. If the current first welding coordinates for the first welding robot 31 and the current second welding coordinates for the second welding robot 32 satisfy the second fool-proofing condition, it indicates that there may not be interference between the two welding robots during welding.

In a feasible implementation, if the second fool-proofing condition is that the two welding robots are spaced by the distance between three adjacent cell posts during welding, that the current first welding coordinates for the first welding robot 31 and the current second welding coordinates for the second welding robot 32 satisfy the second fool-proofing condition means that a distance between the first welding coordinates and the second welding coordinates is greater than or equal to the distance between three adjacent cell posts.

Step B: Control the second welding robot to weld a second cell post corresponding to the second welding coordinates.

It may be understood that fool-proofing determining is performed in real time during welding based on the welding coordinates for each welding robot and the second fool-proofing condition, so that adjustment can be performed in real time based on a current welding scenario, to achieve applicability to different products.

Step C: When it is determined that the first welding coordinates and the second welding coordinates do not satisfy the second fool-proofing condition, determine a welding sequence of the first welding robot and the second welding robot.

Here, if the current first welding coordinates for the first welding robot 31 and the current second welding coordinates for the second welding robot 32 do not satisfy the second fool-proofing condition, it indicates that there is interference between the two welding robots during welding. Exemplarily, if the second fool-proofing condition is that the two welding robots are spaced by the distance between three adjacent cell posts during welding, that the current first welding coordinates for the first welding robot 31 and the current second welding coordinates for the second welding robot 32 do not satisfy the second fool-proofing condition means that a distance between the first welding coordinates and the second welding coordinates is less than the distance between three adjacent cell posts.

In a feasible implementation, the welding sequence of the first welding robot 31 and the second welding robot 32 may be determined based on welding rates of the first welding robot 31 and the second welding robot 32.

Step D: Control, according to the welding sequence, the first welding robot to weld the first cell post corresponding to the first welding coordinates, and the second welding robot to weld the second cell post corresponding to the second welding coordinates.

It may be understood that in a case of a collision between the first welding robot 31 and the second welding robot 32, one of the welding robots may perform welding first, and after the welding robot completes welding, the other welding robot performs welding. In this way, the collision can be avoided.

It should be noted that an example in which the welding device includes two welding robots is used for description in this embodiment of the present disclosure. It should be understood that the welding device may alternatively include another quantity of welding robots and matched downward pressure components and welding components. When the welding device includes another quantity of welding robots, the post welding method provided in this embodiment of the present disclosure is also applicable, and the step of "determining respective welding coordinate sets for the assemblies based on addressing coordinates of every preset quantity of cell posts in the addressing coordinate set of the at least one cell post" needs to be adaptively adjusted.

An embodiment of the present disclosure provides a post welding system. The system includes a controller and a welding device (30 in FIG. 3).

The controller is configured to address, under a guidance based on product data of a product to be welded, at least one cell post in the product to be welded, to obtain an addressing coordinate set of the at least one cell post, where the product data represents a product structure of the product to be welded, and the addressing coordinate set of the at least one cell post represents a position of the at least one cell post in the product to be welded in a current environment.

The controller is further configured to determine a welding coordinate set of the at least one cell post based on the addressing coordinate set of the at least one cell post.

The welding device 30 is configured to weld the at least one cell post based on the welding coordinate set of the at least one cell post, to implement electrical connections between cells in the product to be welded.

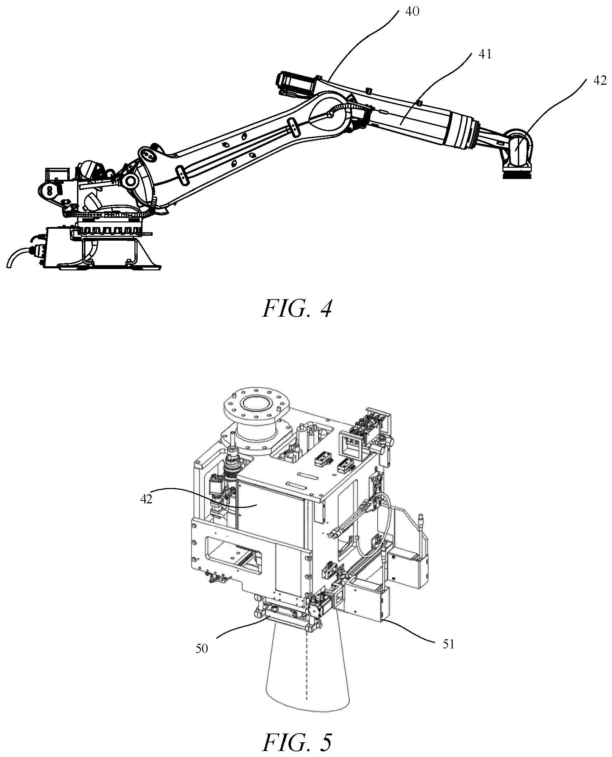

Here, the controller may be a PLC. The welding device 30 is configured to weld the cell post. Exemplarily, as shown in FIG. 3, the welding device 30 may include a first welding robot 31, a first set of pressurization mechanisms 33, a first welding component 35, a second welding robot 32, a second set of pressurization mechanisms 34, a second welding component 36, and the like. The first welding component 35 may be disposed on the first welding robot 31. The first set of pressurization mechanisms 33 are used in conjunction with the first welding robot 31. The first set of pressurization mechanisms 33 are configured to pressurize a cell post to be welded by the first welding robot 31 and a bus plate. The second welding component 36 may be disposed on the second welding robot 32. The second set of pressurization mechanisms 34 are used in conjunction with the second welding robot 32. The second set of pressurization mechanisms 34 are configured to pressurize a cell post to be welded by the second welding robot 32 and the bus plate. The first welding component 35 and the second welding component 36 each may be a galvanometer. The first set of pressurization mechanisms 33 and the second set of pressurization mechanisms 34 each may be a copper nozzle mechanism. Exemplarily, when one welding robot welds four cell posts, there may be four sets of copper nozzle mechanisms, that is, the quantity of cell posts welded by the welding robot at a time corresponds to a structure of the copper nozzle mechanism. It should be noted that the first welding robot 31 and the third welding robot each may be a six-axis robot 40 shown in FIG. 4, and the galvanometer may be a laser galvanometer 42 shown in FIG. 5. The six-axis robot 40 may include a shaft body 41 and the laser galvanometer 42. The laser galvanometer 42 may include a virtual acquisition system 50 and a ranging sensor 51.

The controller mainly automatically determines, based on the product data of the product to be welded, welding coordinates of the at least one cell post in the product to be welded, to implement automatic addressing of different products. The welding device 30 mainly welds, based on the welding coordinates of the at least one cell post obtained through addressing, the product to be welded, to implement electrical connections between the cells in the product to be welded.

It may be understood that addressing, under the guidance based on the product data of the product to be welded, the cell post in the product to be welded can automatically determine the addressing coordinate set of the cell post, to implement automatic addressing before welding. The welding coordinate set of the at least one cell post can be automatically determined based on the addressing coordinate set of the cell post, to implement automatic positioning of a welding point. In this way, no matter what product type of the product to be welded is, welding coordinates of each cell post in the product to be welded can be automatically determined based on the product data of the product to be welded, and only one set of programs, rather than different programs, needs to be written, so that a program development amount is small. In addition, since the welding coordinates of each cell post in the product to be welded are automatically determined based on the product data of the product to be welded, only the product, rather than the program, needs to be replaced during cutting, pulling and model changing on a production line, which brings high cutting, pulling and model changing efficiency.

In some embodiments, the welding device 30 includes the first welding robot 31, the second welding robot 32, the first set of pressurization mechanisms 33, and the second set of pressurization mechanisms 34. The controller is further configured to divide the at least one cell post into a first cell post set and a second cell post set, allocate the first cell post set to the first welding robot 31 and the first set of pressurization mechanisms 33, and allocate the second cell post set to the second welding robot 32 and the second set of pressurization mechanisms 34.

It may be understood that the controller can also implement automatic division of the cell post in the product to be welded, so that post welding efficiency is improved.

In some embodiments, the first welding robot 31 includes the first welding component 35, and the second welding robot 32 includes the second welding component 36. The controller is further configured to determine a welding coordinate set for the first welding robot 31, a downward pressure coordinate set for the first set of pressurization mechanisms 33, and an offset set of the first welding component 35 of the first welding robot 31 under each set of welding coordinates based on addressing coordinates of every preset quantity of first cell posts in the first cell post set. The controller is further configured to determine a welding coordinate set for the second welding robot 32, a downward pressure coordinate set for the second set of pressurization mechanisms 34, and an offset set of the second welding component 36 of the second welding robot 32 under each set of welding coordinates based on addressing coordinates of every preset quantity of second cell posts in the second cell post set.

It may be understood that the controller can automatically determine the welding coordinates for each welding component, so that addressing efficiency is improved.

In some embodiments, the first welding robot 31 is configured to weld every preset quantity of first cell posts after the first set of pressurization mechanisms 33 pressurizes every preset quantity of first cell posts and a first welding material. The second welding robot 32 is configured to weld every preset quantity of second cell posts after the second set of pressurization mechanisms 34 pressurizes every preset quantity of second cell posts and a second welding material.

Here, the first welding material and the second welding material each may be a bus plate, a busbar, or the like.

It may be understood that the pressurization mechanisms are used to pressurize the cell post and the welding materials, so that welding accuracy can be improved.

In some embodiments, the first welding robot 31 is further configured to drive, based on the offset set of the first welding component 35, the first welding component 35 to weld every preset quantity of first cell posts. The second welding robot 32 is further configured to drive, based on the offset set of the second welding component 36, the second welding component 36 to weld every preset quantity of second cell posts.

It may be understood that multiple-by-one welding, for example, four-by-one welding or eight-by-one welding, can be implemented based on the offsets of the welding components.

In some embodiments, the first set of pressurization mechanisms 33 and the second set of pressurization mechanisms 34 are adapted to post spacings of different products. The first set of pressurization mechanisms 33 and the second set of pressurization mechanisms 34 each include a preset quantity of pressurizers.

Here, the pressurization mechanisms may perform servo pitch changing. In a feasible implementation, the pressurization mechanisms may be controlled based on the welding coordinates of the cell post to perform servo pitch changing, for adaptation to different cell spacings.

It should be pointed out here that the foregoing descriptions of the embodiments tend to emphasize differences between the embodiments, and for same or similar parts, reference may be made to each other. It should be understood that "one embodiment" or "an embodiment" mentioned throughout the specification means that specified features, structures, or characteristics related to the embodiment are included in at least one embodiment of the present disclosure. Therefore, "in one embodiment" or "in an embodiment" appearing throughout the specification does not necessarily refer to a same embodiment. **In** addition, these specified features, structures, or characteristics may be combined in one or more embodiments in any appropriate manner. It should be understood that in the embodiments of the present disclosure, sequence numbers of the foregoing steps/processes do not mean execution sequences. The execution sequences of the steps/processes should be determined according to functions and internal logic of the steps/processes, and should not be construed as any limitation on implementation processes of the embodiments of the present disclosure. The sequence numbers of the embodiments of the present disclosure are only for description, and do not represent superiority or inferiority of the embodiments.

It should be noted that in this application, the terminology "include", "comprise" or any other variant is intended to cover non-exclusive inclusion, so that a process, a method, an object or an apparatus that includes a series of elements not only includes those elements, but also includes other elements that are not explicitly listed, or includes inherent elements of the process, method, object or apparatus. **In** the absence of more restrictions, the element defined by the phrase "comprising a/an ..." does not exclude the presence of a further identical element in the process, method, article or apparatus that includes the element.

**In** the several embodiments provided in the present disclosure, it should be understood that the disclosed device and method may be implemented in other manners. The device embodiments described above are merely examples. For example, the unit division is merely logical function division and may be other division in actual implementation. For example, a plurality of units or assemblies may be combined or integrated into another system, or some features may be ignored or may not be performed. In addition, couplings, direct couplings, or communication connections between the displayed or discussed constituent parts may be implemented through some interfaces. The indirect couplings or communication connections between the devices or units may be implemented in electrical, mechanical, or another form.

The foregoing units described as separate parts may or may not be physically separate, and parts displayed as units may or may not be physical units, may be located in one position, or may be distributed on a plurality of network units. Some or all of the units may be selected according to actual requirements to achieve the objectives of the solutions of the embodiments.

In addition, all function units in the embodiments of the present disclosure may be integrated into one processing unit, each of the units may exist alone as a separate unit, or two or more units are integrated into one unit. The integrated unit may be implemented in a form of hardware, or may be implemented in a form of hardware and a software function unit.

### Industrial Applicability

According to the post welding method and the post welding system provided in the embodiments of the present disclosure, the at least one cell post in the product to be welded may be addressed under the guidance based on the product data of the product to be welded, to obtain the addressing coordinate set of the at least one cell post, and the welding coordinate set of the at least one cell post is determined based on the addressing coordinate set of the at least one cell post, to implement, based on the welding coordinate set of the at least one cell post, electrical connections between the cells in the product to be welded. In this way, addressing, under the guidance based on the product data of the product to be welded, the cell post in the product to be welded can automatically determine the addressing coordinate set of the cell post, to implement automatic addressing before welding. The welding coordinate set of the at least one cell post can be automatically determined based on the addressing coordinate set of the cell post, to implement automatic positioning of a welding point. **In** this way, no matter what product type of the product to be welded is, welding coordinates of each cell post in the product to be welded can be automatically determined based on the product data of the product to be welded, and only one set of programs, rather than different programs, needs to be written, so that a program development amount is small. **In** addition, since the welding coordinates of each cell post in the product to be welded are automatically determined based on the product data of the product to be welded, only the product, rather than the program, needs to be replaced during cutting, pulling and model changing on a production line, which brings high cutting, pulling and model changing efficiency.

## Claims

1. A post welding method, comprising:
addressing (101), under a guidance based on product data of a product to be welded, at least one cell post in the product to be welded, to obtain an addressing coordinate set of the at least one cell post, wherein the product data represents a product structure of the product to be welded, and the addressing coordinate set of the at least one cell post represents a position of the at least one cell post in the product to be welded in a current environment; and
determining (102) a welding coordinate set of the at least one cell post based on the addressing coordinate set of the at least one cell post, to implement, based on the welding coordinate set of the at least one cell post, electrical connections between cells in the product to be welded;
wherein addressing means detecting a position of each cell post in the product to be welded;
**characterised in that**, the addressing, under a guidance based on product data of a product to be welded, at least one cell post in the product to be welded, to obtain an addressing coordinate set of the at least one cell post comprises:
determining a photographing coordinate set of the at least one cell post based on a product structure diagram of the product to be welded, wherein the product data comprises the product structure diagram; and
photographing the at least one cell post based on the photographing coordinate set of the at least one cell post, to obtain the addressing coordinate set of the at least one cell post; and
wherein determining a photographing coordinate set of the at least one cell post based on a product structure diagram of the product to be welded comprises:
parsing the product structure diagram of the product to be welded, to obtain a text coordinate set of the at least one cell post;
scanning the text coordinate set of the at least one cell post to obtain a row number and a column number that correspond to each of the at least one cell post; and
generating the photographing coordinate set of the at least one cell post based on the row number and the column number that correspond to each cell post.

2. The post welding method according to claim 1, wherein determining a welding coordinate set of the at least one cell post based on the addressing coordinate set of the at least one cell post comprises:
allocating the at least one cell post to assemblies in a welding device (30) based on the addressing coordinate set of the at least one cell post; and
determining respective welding coordinate sets for the assemblies based on addressing coordinates of every preset quantity of cell posts in the addressing coordinate set of the at least one cell post, the welding coordinate sets for the assemblies representing the welding coordinate set of the at least one cell post.

3. The post welding method according to claim 2, wherein the welding device (30) comprises a first welding robot (31), a second welding robot (32), a first set of pressurization mechanisms (33), and a second set of pressurization mechanisms (34); and
the allocating the at least one cell post to assemblies in a welding device (30) based on the addressing coordinate set of the at least one cell post comprises:
dividing the at least one cell post into a first cell post set and a second cell post set based on the addressing coordinate set of the at least one cell post;
allocating the first cell post set to the first welding robot (31) and the first set of pressurization mechanisms (33); and
allocating the second cell post set to the second welding robot (32) and the second set of pressurization mechanisms (34).

4. The post welding method according to claim 3, wherein the first welding robot (31) comprises a first welding component (35), and the second welding robot (32) comprises a second welding component (36); and
determining respective welding coordinate sets for the assemblies based on addressing coordinates of every preset quantity of cell posts in the addressing coordinate set of the at least one cell post comprises:
performing rotation and translation on addressing coordinates of each first cell post in the first cell post set to obtain processed addressing coordinates of each first cell post;
determining a welding coordinate set for the first welding robot (31), a downward pressure coordinate set for the first set of pressurization mechanisms (33), and an offset set of the first welding component (35) of the first welding robot (31) under each set of welding coordinates based on processed addressing coordinates of every preset quantity of first cell posts;
performing rotation and translation on addressing coordinates of each second cell post in the second cell post set to obtain processed addressing coordinates of each second cell post; and
determining a welding coordinate set for the second welding robot (32), a downward pressure coordinate set for the second set of pressurization mechanisms (34), and an offset set of the second welding component (36) of the second welding robot (32) under each set of welding coordinates based on processed addressing coordinates of every preset quantity of second cell posts, optionally, wherein determining a welding coordinate set for the first welding robot (31), a downward pressure coordinate set for the first set of pressurization mechanisms (33), and an offset set of the first welding component (35) of the first welding robot (31) under each set of welding coordinates based on processed addressing coordinates of every preset quantity of first cell posts comprises:
using the processed addressing coordinates of every preset quantity of first cell posts as downward pressure coordinates for the first set of pressurization mechanisms (33), to obtain the downward pressure coordinate set for the first set of pressurization mechanisms (33);
using a central point of the processed addressing coordinates of every preset quantity of first cell posts as one set of welding coordinates for the first welding robot (31), to obtain the welding coordinate set for the first welding robot (31); and
using offsets between the processed addressing coordinates of every preset quantity of first cell posts and the central point as offsets of the first welding component (35) of the first welding robot (31) under one set of welding coordinates, to obtain the offset set of the first welding component (35).

5. The post welding method according to claim 3 or 4, wherein the implementing, based on the welding coordinate set of the at least one cell post, electrical connections between cells in the product to be welded comprises:
determining a placement type of the product to be welded and a first condition;
determining a first welding sequence of the first welding robot (31) and a second welding sequence of the second welding robot (32) based on the welding coordinate set of the at least one cell post, the placement type of the product to be welded, and the first condition;
controlling the first welding robot (31) to weld the first cell post set according to the first welding sequence; and
controlling the second welding robot (32) to weld the second cell post set according to the second welding sequence.

6. The post welding method according to claim 3 or 4, wherein the implementing, based on the welding coordinate set of the at least one cell post, electrical connections between cells in the product to be welded comprises:
when it is determined that current first welding coordinates for the first welding robot (31) and current second welding coordinates for the second welding robot (32) satisfy a second condition, controlling the first welding robot (31) to weld a first cell post corresponding to the first welding coordinates; and
controlling the second welding robot (32) to weld a second cell post corresponding to the second welding coordinates, optionally, further comprising:
when it is determined that the first welding coordinates and the second welding coordinates do not satisfy the second condition, determining a welding sequence of the first welding robot (31) and the second welding robot (32); and
controlling, according to the welding sequence, the first welding robot (31) to weld the first cell post corresponding to the first welding coordinates, and the second welding robot (32) to weld the second cell post corresponding to the second welding coordinates.

7. The post welding method according to claim 5, wherein determining a placement type of the product to be welded and a first condition comprises:
determining the first condition, a first quantity of cell posts comprised in a largest row of the product to be welded, and a second quantity of cell posts comprised in a largest column of the product to be welded; and
determining, based on the first quantity and the second quantity, the placement type of the product to be welded.

8. The post welding method according to claim 1, further comprising:
setting a status value of the at least one cell post to a first identifier before photographing, wherein the first identifier represents that a corresponding cell post is not photographed; and
setting the status value of the at least one cell post to a second identifier after photographing, wherein the second identifier represents that the corresponding cell post is already photographed.

9. The post welding method according to claim 5, wherein the first condition is that the first welding robot (31) is spaced from the second welding robot (32) by a first safety distance during welding; and the second condition is that the first welding robot (31) is spaced from the second welding robot (32) by a second safety distance during welding.

10. A post welding system, comprising a controller and a welding device (30), wherein
the controller is configured to address, under a guidance based on product data of a product to be welded, at least one cell post in the product to be welded, to obtain an addressing coordinate set of the at least one cell post, wherein the product data represents a product structure of the product to be welded, and the addressing coordinate set of the at least one cell post represents a position of the at least one cell post in the product to be welded in a current environment;
the controller is further configured to determine a welding coordinate set of the at least one cell post based on the addressing coordinate set of the at least one cell post; and
the welding device (30) is configured to weld the at least one cell post based on the welding coordinate set of the at least one cell post, to implement electrical connections between cells in the product to be welded;
wherein addressing means detecting a position of each cell post in the product to be welded; and
**characterised in that**, the addressing, under a guidance based on product data of a product to be welded, at least one cell post in the product to be welded, to obtain an addressing coordinate set of the at least one cell post comprises:
determining a photographing coordinate set of the at least one cell post based on a product structure diagram of the product to be welded, wherein the product data comprises the product structure diagram; and
photographing the at least one cell post based on the photographing coordinate set of the at least one cell post, to obtain the addressing coordinate set of the at least one cell post; and
wherein determining a photographing coordinate set of the at least one cell post based on a product structure diagram of the product to be welded comprises:
parsing the product structure diagram of the product to be welded, to obtain a text coordinate set of the at least one cell post;
scanning the text coordinate set of the at least one cell post to obtain a row number and a column number that correspond to each of the at least one cell post; and
generating the photographing coordinate set of the at least one cell post based on the row number and the column number that correspond to each cell post.

11. The post welding system according to claim 10, wherein the welding device (30) comprises a first welding robot (31), a second welding robot (32), a first set of pressurization mechanisms (33), and a second set of pressurization mechanisms (34); and
the controller is further configured to divide the at least one cell post into a first cell post set and a second cell post set, allocate the first cell post set to the first welding robot (31) and the first set of pressurization mechanisms (33), and allocate the second cell post set to the second welding robot (32) and the second set of pressurization mechanisms (34), optionally, wherein the first welding robot (31) comprises a first welding component (35), and the second welding robot (32) comprises a second welding component (36);
the controller is further configured to determine a welding coordinate set for the first welding robot (31), a downward pressure coordinate set for the first set of pressurization mechanisms (33), and an offset set of the first welding component (35) of the first welding robot (31) under each set of welding coordinates based on addressing coordinates of every preset quantity of first cell posts in the first cell post set; and
the controller is further configured to determine a welding coordinate set for the second welding robot (32), a downward pressure coordinate set for the second set of pressurization mechanisms (34), and an offset set of the second welding component (36) of the second welding robot (32) under each set of welding coordinates based on addressing coordinates of every preset quantity of second cell posts in the second cell post set.

12. The post welding system according to claim 11, wherein
the first welding robot (31) is configured to weld every preset quantity of first cell posts after the first set of pressurization mechanisms (33) pressurizes every preset quantity of first cell posts and a first welding material; and
the second welding robot (32) is configured to weld every preset quantity of second cell posts after the second set of pressurization mechanisms (34) pressurizes every preset quantity of second cell posts and a second welding material, optionally, wherein
the first welding robot (31) is further configured to drive, based on the offset set of the first welding component (35), the first welding component (35) to weld every preset quantity of first cell posts; and
the second welding robot (32) is further configured to drive, based on the offset set of the second welding component (36), the second welding component (36) to weld every preset quantity of second cell posts.

13. The post welding system according to claim 11 or 12, wherein the first set of pressurization mechanisms (33) and the second set of pressurization mechanisms (34) are adapted to post spacings of different products; and
the first set of pressurization mechanisms (33) and the second set of pressurization mechanisms (34) each comprise a preset quantity of pressurizers.

## Patentansprüche

1. Pfostenschweißverfahren, das Folgendes beinhaltet:
Adressieren (101), unter einer auf Produktdaten eines zu schweißenden Produkts basierenden Führung, mindestens eines Zellpfostens in dem zu schweißenden Produkt, um einen Adressierungskoordinatensatz des mindestens einen Zellpfostens zu erhalten, wobei die Produktdaten eine Produktstruktur des zu schweißenden Produkts darstellen und der Adressierungskoordinatensatz des mindestens einen Zellpfostens eine Position des mindestens einen Zellpfostens in dem zu schweißenden Produkt in einer aktuellen Umgebung darstellt; und
Bestimmen (102) eines Schweißkoordinatensatzes des mindestens einen Zellpfostens auf der Basis des Adressierungskoordinatensatzes des mindestens einen Zellpfostens, um auf der Basis des Schweißkoordinatensatzes des mindestens einen Zellpfostens elektrische Verbindungen zwischen Zellen in dem zu schweißenden Produkt herzustellen;
wobei das Adressieren das Erkennen einer Position jedes Zellpfostens in dem zu schweißenden Produkt bedeutet;
**dadurch gekennzeichnet, dass** das Adressieren, unter einer auf Produktdaten eines zu schweißenden Produkts basierenden Führung, mindestens eines Zellpfostens in dem zu schweißenden Produkt, um einen Adressierungskoordinatensatz des mindestens einen Zellpfostens zu erhalten, Folgendes beinhaltet:
Bestimmen eines Fotografierkoordinatensatzes des mindestens einen Zellpfostens auf der Basis eines Produktstrukturdiagramms des zu schweißenden Produkts, wobei die Produktdaten das Produktstrukturdiagramm umfassen; und
Fotografieren des mindestens einen Zellpfostens auf der Basis des Fotografierkoordinatensatzes des mindestens einen Zellpfostens, um den Adressierungskoordinatensatz des mindestens einen Zellpfostens zu erhalten; und
wobei das Bestimmen eines Fotografierkoordinatensatzes des mindestens einen Zellpfostens auf der Basis eines Produktstrukturdiagramms des zu schweißenden Produkts Folgendes beinhaltet:
Parsen des Produktstrukturdiagramms des zu schweißenden Produkts, um einen Textkoordinatensatz des mindestens einen Zellpfostens zu erhalten;
Scannen des Textkoordinatensatzes des mindestens einen Zellpfostens, um eine Reihennummer und eine Spaltennummer zu erhalten, die jeweils dem mindestens einen Zellpfosten entsprechen; und
Erzeugen des Fotografierkoordinatensatzes des mindestens einen Zellpfostens auf der Basis der Reihennummer und der Spaltennummer, die jedem Zellpfosten entsprechen.

2. Pfostenschweißverfahren nach Anspruch 1, wobei das Bestimmen eines Schweißkoordinatensatzes des mindestens einen Zellpfostens auf der Basis des Adressierungskoordinatensatzes des mindestens einen Zellpfostens Folgendes beinhaltet:
Zuordnen des mindestens einen Zellpfostens zu Baugruppen in einer Schweißvorrichtung (30) auf der Basis des Adressierungskoordinatensatzes des mindestens einen Zellpfostens; und
Bestimmen jeweiliger Schweißkoordinatensätze für die Baugruppen auf der Basis von Adressierungskoordinaten jeder voreingestellten Anzahl von Zellpfosten in dem Adressierungskoordinatensatz des mindestens einen Zellpfostens, wobei die Schweißkoordinatensätze für die Baugruppen den Schweißkoordinatensatz des mindestens einen Zellpfostens darstellen.

3. Pfostenschweißverfahren nach Anspruch 2, wobei die Schweißvorrichtung (30) einen ersten Schweißroboter (31), einen zweiten Schweißroboter (32), einen ersten Satz von Druckbeaufschlagungsmechanismen (33) und einen zweiten Satz von Druckbeaufschlagungsmechanismen (34) umfasst; und
das Zuordnen des mindestens einen Zellpfostens zu Baugruppen in einer Schweißvorrichtung (30) auf der Basis des Adressierungskoordinatensatzes des mindestens einen Zellpfostens Folgendes beinhaltet:
Unterteilen des mindestens einen Zellpfostens in einen ersten Zellpfostensatz und einen zweiten Zellpfostensatz auf der Basis des Adressierungskoordinatensatzes des mindestens einen Zellpfostens;
Zuordnen des ersten Zellpfostensatzes zum ersten Schweißroboter (31) und zum ersten Satz von Druckbeaufschlagungsmechanismen (33); und
Zuordnen des zweiten Zellpfostensatzes zum zweiten Schweißroboter (32) und zum zweiten Satz von Druckbeaufschlagungsmechanismen (34).

4. Pfostenschweißverfahren nach Anspruch 3, wobei der erste Schweißroboter (31) eine erste Schweißkomponente (35) umfasst und der zweite Schweißroboter (32) eine zweite Schweißkomponente (36) umfasst; und
das Bestimmen jeweiliger Schweißkoordinatensätze für die Baugruppen auf der Basis von Adressierungskoordinaten jeder voreingestellten Anzahl von Zellpfosten im Adressierungskoordinatensatz des mindestens einen Zellpfostens Folgendes beinhaltet:
Durchführen von Drehen und Verschieben an Adressierungskoordinaten jedes ersten Zellpfostens im ersten Zellpfostensatz, um verarbeitete Adressierungskoordinaten jedes ersten Zellpfostens zu erhalten;
Bestimmen eines Schweißkoordinatensatzes für den ersten Schweißroboter (31), eines Abwärtsdruck-Koordinatensatzes für den ersten Satz von Druckbeaufschlagungsmechanismen (33) und eines Versatzsatzes der ersten Schweißkomponente (35) des ersten Schweißroboters (31) unter jedem Satz von Schweißkoordinaten auf der Basis von verarbeiteten Adressierungskoordinaten jeder voreingestellten Anzahl von ersten Zellpfosten;
Durchführen von Drehen und Verschieben an Adressierungskoordinaten jedes zweiten Zellpfostens im zweiten Zellpfostensatz, um verarbeitete Adressierungskoordinaten jedes zweiten Zellpfostens zu erhalten; und
Bestimmen eines Schweißkoordinatensatzes für den zweiten Schweißroboter (32), eines Abwärtsdruck-Koordinatensatzes für den zweiten Satz von Druckbeaufschlagungsmechanismen (34) sowie eines Versatzsatzes der zweiten Schweißkomponente (36) des zweiten Schweißroboters (32) unter jedem Satz von Schweißkoordinaten auf der Basis von verarbeiteten Adressierungskoordinaten jeder voreingestellten Anzahl von zweiten Zellenpfosten, wobei optional das Bestimmen eines Schweißkoordinatensatzes für den ersten Schweißroboter (31), eines Abwärtsdruck-Koordinatensatzes für den ersten Satz von Druckbeaufschlagungsmechanismen (33) sowie eines Versatzsatzes der ersten Schweißkomponente (35) des ersten Schweißroboters (31) unter jedem Satz von Schweißkoordinaten auf der Basis verarbeiteter Adressierungskoordinaten jeder voreingestellten Anzahl von ersten Zellenpfosten Folgendes beinhaltet:
Verwenden der verarbeiteten Adressierungskoordinaten jeder voreingestellten Anzahl von ersten Zellenpfosten als Abwärtsdruck-Koordinaten für den ersten Satz von Druckbeaufschlagungsmechanismen (33), um den Abwärtsdruck-Koordinatensatz für den ersten Satz von Druckbeaufschlagungsmechanismen (33) zu erhalten;
Verwenden eines Mittelpunkts der verarbeiteten Adressierungskoordinaten jeder voreingestellten Anzahl von ersten Zellpfosten als einen Satz von Schweißkoordinaten für den ersten Schweißroboter (31), um den Schweißkoordinatensatz für den ersten Schweißroboter (31) zu erhalten; und
Verwenden von Versätzen zwischen den verarbeiteten Adressierungskoordinaten jeder voreingestellten Anzahl von ersten Zellpfosten und dem Mittelpunkt als Versätze der ersten Schweißkomponente (35) des ersten Schweißroboters (31) unter einem Satz von Schweißkoordinaten, um den Versatzsatz der ersten Schweißkomponente (35) zu erhalten.

5. Pfostenschweißverfahren nach Anspruch 3 oder 4, wobei das Herstellen, auf der Basis des Schweißkoordinatensatzes des mindestens einen Zellpfostens, elektrischer Verbindungen zwischen Zellen in dem zu schweißenden Produkt Folgendes beinhaltet:
Bestimmen eines Platzierungstyps des zu schweißenden Produkts und einer ersten Bedingung;
Bestimmen einer ersten Schweißsequenz des ersten Schweißroboters (31) und einer zweiten Schweißsequenz des zweiten Schweißroboters (32) auf der Basis des Schweißkoordinatensatzes des mindestens einen Zellpfostens, des Platzierungstyps des zu schweißenden Produkts und der ersten Bedingung;
Steuern des ersten Schweißroboters (31) zum Verschweißen des ersten Zellpfostensatzes gemäß der ersten Schweißsequenz; und
Steuern des zweiten Schweißroboters (32) zum Verschweißen des zweiten Zellpfostensatzes gemäß der zweiten Schweißsequenz.

6. Pfostenschweißverfahren nach Anspruch 3 oder 4, wobei das Herstellen, auf der Basis des Schweißkoordinatensatzes des mindestens einen Zellpfostens, elektrischer Verbindungen zwischen Zellen in dem zu schweißenden Produkt Folgendes beinhaltet:
Steuern, wenn festgestellt wird, dass aktuelle erste Schweißkoordinaten für den ersten Schweißroboter (31) und aktuelle zweite Schweißkoordinaten für den zweiten Schweißroboter (32) eine zweite Bedingung erfüllen, des ersten Schweißroboters (31) zum Verschweißen eines ersten Zellpfostens entsprechend den ersten Schweißkoordinaten; und
Steuern des zweiten Schweißroboters (32) zum Verschweißen eines zweiten Zellpfostens entsprechend den zweiten Schweißkoordinaten, das optional ferner Folgendes beinhaltet:
Bestimmen, wenn festgestellt wird, dass die ersten Schweißkoordinaten und die zweiten Schweißkoordinaten die zweite Bedingung nicht erfüllen, einer Schweißsequenz des ersten Schweißroboters (31) und des zweiten Schweißroboters (32); und
Steuern, gemäß der Schweißsequenz, des ersten Schweißroboters (31) zum Verschweißen des ersten Zellpfostens entsprechend den ersten Schweißkoordinaten und des zweiten Schweißroboters (32) zum Verschweißen des zweiten Zellpfostens entsprechend den zweiten Schweißkoordinaten.

7. Pfostenschweißverfahren nach Anspruch 5, wobei das Bestimmen eines Platzierungstyps des zu verschweißenden Produkts und einer ersten Bedingung Folgendes beinhaltet:
Bestimmen der ersten Bedingung, einer ersten Anzahl von Zellpfosten, die in einer größten Reihe des zu schweißenden Produkts enthalten sind, und einer zweiten Anzahl von Zellpfosten, die in einer größten Spalte des zu schweißenden Produkts enthalten sind; und
Bestimmen des Platzierungstyps des zu schweißenden Produkts auf der Basis der ersten und der zweiten Anzahl.

8. Pfostenschweißverfahren nach Anspruch 1, das ferner Folgendes beinhaltet:
Setzen eines Statuswerts des mindestens einen Zellpfostens auf eine erste Kennung vor dem Fotografieren, wobei die erste Kennung angibt, dass ein entsprechender Zellpfosten nicht fotografiert wurde; und
Setzen des Statuswerts des mindestens einen Zellpfostens auf eine zweite Kennung nach dem Fotografieren, wobei die zweite Kennung angibt, dass der entsprechende Zellpfosten bereits fotografiert wurde.

9. Pfostenschweißverfahren nach Anspruch 5, wobei die erste Bedingung die ist, dass der erste Schweißroboter (31) während des Schweißens um eine erste Sicherheitsdistanz vom zweiten Schweißroboter (32) beabstandet ist; und die zweite Bedingung die ist, dass der erste Schweißroboter (31) während des Schweißens um eine zweite Sicherheitsdistanz vom zweiten Schweißroboter (32) beabstandet ist.

10. Pfostenschweißsystem, das eine Steuerung und eine Schweißvorrichtung (30) umfasst, wobei
die Steuerung zum Adressieren, unter einer auf Produktdaten eines zu schweißenden Produkts basierenden Führung, mindestens eines Zellpfostens in dem zu schweißenden Produkt konfiguriert ist, um einen Adressierungskoordinatensatz des mindestens einen Zellpfostens zu erhalten, wobei die Produktdaten eine Produktstruktur des zu schweißenden Produkts darstellen und der Adressierungskoordinatensatz des mindestens einen Zellpfostens eine Position des mindestens einen Zellpfostens in dem zu schweißenden Produkt in einer aktuellen Umgebung darstellt;
die Steuerung ferner zum Bestimmen eines Schweißkoordinatensatzes des mindestens einen Zellpfostens auf der Basis des Adressierungskoordinatensatzes des mindestens einen Zellpfostens konfiguriert ist; und
die Schweißvorrichtung (30) zum Verschweißen des mindestens einen Zellpfostens auf der Basis des Schweißkoordinatensatzes des mindestens einen Zellpfostens konfiguriert ist, um elektrische Verbindungen zwischen Zellen in dem zu verschweißenden Produkt herzustellen;
wobei das Adressieren das Erkennen einer Position jedes Zellpfostens in dem zu schweißenden Produkt bedeutet; und
**dadurch gekennzeichnet, dass** das Adressieren, unter einer auf Produktdaten eines zu schweißenden Produkts basierenden Führung, mindestens eines Zellpfostens in dem zu schweißenden Produkt, um einen Adressierungskoordinatensatz des mindestens einen Zellpfostens zu erhalten, Folgendes beinhaltet:
Bestimmen eines Fotografierkoordinatensatzes des mindestens einen Zellpfostens auf der Basis eines Produktstrukturdiagramms des zu schweißenden Produkts, wobei die Produktdaten das Produktstrukturdiagramm umfassen; und
Fotografieren des mindestens einen Zellpfostens auf der Basis des Fotografierkoordinatensatzes des mindestens einen Zellpfostens, um den Adressierungskoordinatensatz des mindestens einen Zellpfostens zu erhalten; und
wobei das Bestimmen eines Fotografierkoordinatensatzes des mindestens einen Zellpfostens auf der Basis eines Produktstrukturdiagramms des zu schweißenden Produkts Folgendes beinhaltet:
Parsen des Produktstrukturdiagramms des zu schweißenden Produkts, um einen Textkoordinatensatz des mindestens einen Zellpfostens zu erhalten;
Scannen des Textkoordinatensatzes des mindestens einen Zellpfostens, um eine Reihennummer und eine Spaltennummer zu erhalten, die jeweils dem mindestens einen Zellpfosten entsprechen; und
Erzeugen des Fotografierkoordinatensatzes des mindestens einen Zellpfostens auf der Basis der Reihennummer und der Spaltennummer, die jedem Zellpfosten entsprechen.

11. Pfostenschweißsystem nach Anspruch 10, wobei die Schweißvorrichtung (30) einen ersten Schweißroboter (31), einen zweiten Schweißroboter (32), einen ersten Satz von Druckbeaufschlagungsmechanismen (33) und einen zweiten Satz von Druckbeaufschlagungsmechanismen (34) umfasst; und
die Steuerung ferner konfiguriert ist zum Unterteilen des mindestens einen Zellpfostens in einen ersten Zellpfostensatz und einen zweiten Zellpfostensatz, Zuordnen des ersten Zellpfostensatzes zum ersten Schweißroboter (31) und zum ersten Satz von Druckbeaufschlagungsmechanismen (33) und Zuordnen des zweiten Zellpfostensatzes zum zweiten Schweißroboter (32) und dem zweiten Satz von Druckbeaufschlagungsmechanismen (34), wobei optional der erste Schweißroboter (31) eine erste Schweißkomponente (35) umfasst und der zweite Schweißroboter (32) eine zweite Schweißkomponente (36) umfasst;
die Steuerung ferner konfiguriert ist zum Bestimmen eines Schweißkoordinatensatzes für den ersten Schweißroboter (31), eines Abwärtsdruck-Koordinatensatzes für den ersten Satz von Druckbeaufschlagungsmechanismen (33) und eines Versatzsatzes der ersten Schweißkomponente (35) des ersten Schweißroboters (31) unter jedem Satz von Schweißkoordinaten auf der Basis von Adressierungskoordinaten jeder voreingestellten Anzahl von ersten Zellpfosten im ersten Zellpfostensatz; und
die Steuerung ferner konfiguriert ist zum Bestimmen eines Schweißkoordinatensatzes für den zweiten Schweißroboter (32), eines Abwärtsdruck-Koordinatensatzes für den zweiten Satz von Druckbeaufschlagungsmechanismen (34) und eines Versatzsatzes der zweiten Schweißkomponente (36) des zweiten Schweißroboters (32) unter jedem Satz von Schweißkoordinaten auf der Basis von Adressierungskoordinaten jeder voreingestellten Anzahl von zweiten Zellpfosten im zweiten Zellpfostensatz.

12. Pfostenschweißsystem nach Anspruch 11, wobei
der erste Schweißroboter (31) zum Verschweißen jeder voreingestellten Anzahl von ersten Zellenpfosten konfiguriert ist, nachdem der erste Satz von Druckbeaufschlagungsmechanismen (33) jede voreingestellte Anzahl von ersten Zellpfosten und ein erstes Schweißmaterial mit Druck beaufschlagt hat; und
der zweite Schweißroboter (32) zum Verschweißen jeder voreingestellten Anzahl von zweiten Zellpfosten konfiguriert ist, nachdem der zweite Satz von Druckbeaufschlagungsmechanismen (34) jede voreingestellte Anzahl von zweiten Zellpfosten und ein zweites Schweißmaterial mit Druck beaufschlagt hat, wobei optional
der erste Schweißroboter (31) ferner zum Ansteuern, auf der Basis des Versatzsatzes der ersten Schweißkomponente (35), der ersten Schweißkomponente (35) zum Verschweißen jeder voreingestellten Anzahl von ersten Zellpfosten konfiguriert ist; und
der zweite Schweißroboter (32) ferner zum Ansteuern, auf der Basis des Versatzsatzes der zweiten Schweißkomponente (36), der zweiten Schweißkomponente (36) zum Verschweißen jeder voreingestellten Anzahl von zweiten Zellpfosten konfiguriert ist.

13. Pfostenschweißsystem nach Anspruch 11 oder 12, wobei der erste Satz von Druckbeaufschlagungsmechanismen (33) und der zweite Satz von Druckbeaufschlagungsmechanismen (34) an Pfostenabstände verschiedener Produkte angepasst sind; und
der erste Satz von Druckbeaufschlagungsmechanismen (33) und der zweite Satz von Druckbeaufschlagungsmechanismen (34) jeweils eine voreingestellte Anzahl von Druckbeaufschlagungsvorrichtungen umfassen.

## Revendications

1. Procédé de soudage de plots, comprenant les étapes consistant à :
repérer (101), sous un guidage basé sur des données de produit d'un produit à souder, au moins un plot de cellule dans le produit à souder, pour obtenir un ensemble de coordonnées de repérage de l'au moins un plot de cellule, les données de produit représentant une structure de produit du produit à souder, et l'ensemble de coordonnées de repérage de l'au moins un plot de cellule représentant une position de l'au moins un plot de cellule dans le produit à souder dans un environnement actuel ; et
déterminer (102) un ensemble de coordonnées de soudage de l'au moins un plot de cellule sur la base de l'ensemble de coordonnées de repérage de l'au moins un plot de cellule, pour mettre en œuvre, sur la base de l'ensemble de coordonnées de soudage de l'au moins un plot de cellule, des connexions électriques entre des cellules dans le produit à souder ;
le repérage signifiant détecter une position de chaque plot de cellule dans le produit à souder ;
le procédé étant **caractérisé en ce que** le repérage, sous un guidage basé sur des données de produit d'un produit à souder, d'au moins un plot de cellule dans le produit à souder, pour obtenir un ensemble de coordonnées de repérage de l'au moins un plot de cellule, comprend les étapes consistant à :
déterminer un ensemble de coordonnées photographiques de l'au moins un plot de cellule sur la base d'un schéma de structure de produit du produit à souder, les données de produit comprenant le schéma de structure de produit ; et
photographier l'au moins un plot de cellule sur la base de l'ensemble de coordonnées photographiques de l'au moins un plot de cellule, pour obtenir l'ensemble de coordonnées de repérage de l'au moins un plot de cellule ; et
la détermination d'un ensemble de coordonnées photographiques de l'au moins un plot de cellule sur la base d'un schéma de structure de produit du produit à souder comprenant les étapes consistant à :
analyser le schéma de structure de produit du produit à souder, pour obtenir un ensemble de coordonnées textuelles de l'au moins un plot de cellule ;
balayer l'ensemble de coordonnées textuelles de l'au moins un plot de cellule pour obtenir un numéro de rangée et un numéro de colonne qui correspondent à chacun de l'au moins un plot de cellule ; et
générer l'ensemble de coordonnées photographiques de l'au moins un plot de cellule sur la base du numéro de rangée et du numéro de colonne qui correspondent à chaque plot de cellule.

2. Procédé de soudage de plots selon la revendication 1, la détermination d'un ensemble de coordonnées de soudage de l'au moins un plot de cellule sur la base de l'ensemble de coordonnées de repérage de l'au moins un plot de cellule comprenant les étapes consistant à :
affecter l'au moins un plot de cellule à des ensembles dans un dispositif de soudage (30) sur la base de l'ensemble de coordonnées de repérage de l'au moins un plot de cellule ; et
déterminer des ensembles de coordonnées de soudage respectifs pour les ensembles sur la base de coordonnées de repérage de chaque quantité prédéfinie de plots de cellule dans l'ensemble de coordonnées de repérage de l'au moins un plot de cellule, les ensembles de coordonnées de soudage pour les ensembles représentant l'ensemble de coordonnées de soudage de l'au moins un plot de cellule.

3. Procédé de soudage de plots selon la revendication 2, le dispositif de soudage (30) comprenant un premier robot de soudage (31), un second robot de soudage (32), un premier ensemble de mécanismes de pressurisation (33) et un second ensemble de mécanismes de pressurisation (34) ; et
l'affectation de l'au moins un plot de cellule à des ensembles dans un dispositif de soudage (30) sur la base de l'ensemble de coordonnées de repérage de l'au moins un plot de cellule comprenant les étapes consistant à :
diviser l'au moins un plot de cellule en un premier ensemble de plots de cellule et un second ensemble de plots de cellule sur la base de l'ensemble de coordonnées de repérage de l'au moins un plot de cellule ;
affecter le premier ensemble de plots de cellule au premier robot de soudage (31) et au premier ensemble de mécanismes de pressurisation (33) ; et
affecter le second ensemble de plots de cellule au second robot de soudage (32) et au second ensemble de mécanismes de pressurisation (34).

4. Procédé de soudage de plots selon la revendication 3, le premier robot de soudage (31) comprenant un premier composant de soudage (35), et le second robot de soudage (32) comprenant un second composant de soudage (36) ; et
la détermination d'ensembles de coordonnées de soudage respectifs pour les ensembles sur la base de coordonnées de repérage de chaque quantité prédéfinie de plots de cellule dans l'ensemble de coordonnées de repérage de l'au moins un plot de cellule comprenant les étapes consistant à :
réaliser une rotation et une translation sur des coordonnées de repérage de chaque premier plot de cellule dans le premier ensemble de plots de cellule pour obtenir des coordonnées de repérage traitées de chaque premier plot de cellule ;
déterminer un ensemble de coordonnées de soudage pour le premier robot de soudage (31), un ensemble de coordonnées de pression vers le bas pour le premier ensemble de mécanismes de pressurisation (33), et un ensemble de décalages du premier composant de soudage (35) du premier robot de soudage (31) sous chaque ensemble de coordonnées de soudage sur la base de coordonnées de repérage traitées de chaque quantité prédéfinie de premiers plots de cellule ;
réaliser une rotation et une translation sur des coordonnées de repérage de chaque second plot de cellule dans le second ensemble de plots de cellule pour obtenir des coordonnées de repérage traitées de chaque second plot de cellule ; et
déterminer un ensemble de coordonnées de soudage pour le second robot de soudage (32), un ensemble de coordonnées de pression vers le bas pour le second ensemble de mécanismes de pressurisation (34), et un ensemble de décalages du second composant de soudage (36) du second robot de soudage (32) sous chaque ensemble de coordonnées de soudage sur la base de coordonnées de repérage traitées de chaque quantité prédéfinie de seconds plots de cellule, éventuellement la détermination d'un ensemble de coordonnées de soudage pour le premier robot de soudage (31), d'un ensemble de coordonnées de pression vers le bas pour le premier ensemble de mécanismes de pressurisation (33), et d'un ensemble de décalages du premier composant de soudage (35) du premier robot de soudage (31) sous chaque ensemble de coordonnées de soudage sur la base de coordonnées de repérage traitées de chaque quantité prédéfinie de premiers plots de cellule comprenant les étapes consistant à :
utiliser les coordonnées de repérage traitées de chaque quantité prédéfinie de premiers plots de cellule comme coordonnées de pression vers le bas pour le premier ensemble de mécanismes de pressurisation (33), pour obtenir l'ensemble de coordonnées de pression vers le bas pour le premier ensemble de mécanismes de pressurisation (33) ;
utiliser un point central des coordonnées de repérage traitées de chaque quantité prédéfinie de premiers plots de cellule comme un ensemble de coordonnées de soudage pour le premier robot de soudage (31), pour obtenir l'ensemble de coordonnées de soudage pour le premier robot de soudage (31) ; et
utiliser des décalages entre les coordonnées de repérage traitées de chaque quantité prédéfinie de premiers plots de cellule et le point central comme décalages du premier composant de soudage (35) du premier robot de soudage (31) sous un ensemble de coordonnées de soudage, pour obtenir l'ensemble de décalages du premier composant de soudage (35).

5. Procédé de soudage de plots selon la revendication 3 ou 4, la mise en œuvre, sur la base de l'ensemble de coordonnées de soudage de l'au moins un plot de cellule, de connexions électriques entre des cellules dans le produit à souder comprenant les étapes consistant à :
déterminer un type de placement du produit à souder et une première condition ;
déterminer une première séquence de soudage du premier robot de soudage (31) et une seconde séquence de soudage du second robot de soudage (32) sur la base de l'ensemble de coordonnées de soudage de l'au moins un plot de cellule, du type de placement du produit à souder et de la première condition ;
commander le premier robot de soudage (31) pour souder le premier ensemble de plots de cellule selon la première séquence de soudage ; et
commander le second robot de soudage (32) pour souder le second ensemble de plots de cellule selon la seconde séquence de soudage.

6. Procédé de soudage de plots selon la revendication 3 ou 4, la mise en œuvre, sur la base de l'ensemble de coordonnées de soudage de l'au moins un plot de cellule, de connexions électriques entre des cellules dans le produit à souder comprenant les étapes consistant à :
lorsqu'il est déterminé que des premières coordonnées de soudage actuelles pour le premier robot de soudage (31) et que des secondes coordonnées de soudage actuelles pour le second robot de soudage (32) satisfont à une seconde condition, commander le premier robot de soudage (31) pour souder un premier plot de cellule correspondant aux premières coordonnées de soudage ; et
commander le second robot de soudage (32) pour souder un second plot de cellule correspondant aux secondes coordonnées de soudage, éventuellement le procédé comprenant en outre les étapes consistant à :
lorsqu'il est déterminé que les premières coordonnées de soudage et que les secondes coordonnées de soudage ne satisfont pas à la seconde condition, déterminer une séquence de soudage du premier robot de soudage (31) et du second robot de soudage (32) ; et
commander, selon la séquence de soudage, le premier robot de soudage (31) pour souder le premier plot de cellule correspondant aux premières coordonnées de soudage, et le second robot de soudage (32) pour souder le second plot de cellule correspondant aux secondes coordonnées de soudage.

7. Procédé de soudage de plots selon la revendication 5, la détermination d'un type de placement du produit à souder et d'une première condition comprenant les étapes consistant à :
déterminer la première condition, une première quantité de plots de cellule compris dans une rangée la plus grande du produit à souder, et une seconde quantité de plots de cellule compris dans une colonne la plus grande du produit à souder ; et
déterminer, sur la base de la première quantité et de la seconde quantité, le type de placement du produit à souder.

8. Procédé de soudage de plots selon la revendication 1, comprenant en outre les étapes consistant à :
définir une valeur d'état de l'au moins un plot de cellule sur un premier identifiant avant la photographie, le premier identifiant représentant qu'un plot de cellule correspondant n'est pas photographié ; et
définir la valeur d'état de l'au moins un plot de cellule sur un second identifiant après la photographie, le second identifiant représentant que le plot de cellule correspondant est déjà photographié.

9. Procédé de soudage de plots selon la revendication 5, la première condition étant que le premier robot de soudage (31) soit espacé du second robot de soudage (32) d'une première distance de sécurité pendant le soudage ; et la seconde condition étant que le premier robot de soudage (31) soit espacé du second robot de soudage (32) d'une seconde distance de sécurité pendant le soudage.

10. Système de soudage de plots, comprenant un dispositif de commande et un dispositif de soudage (30),
le dispositif de commande étant configuré pour repérer, sous un guidage basé sur des données de produit d'un produit à souder, au moins un plot de cellule dans le produit à souder, pour obtenir un ensemble de coordonnées de repérage de l'au moins un plot de cellule, les données de produit représentant une structure de produit du produit à souder, et l'ensemble de coordonnées de repérage de l'au moins un plot de cellule représentant une position de l'au moins un plot de cellule dans le produit à souder dans un environnement actuel ;
le dispositif de commande étant en outre configuré pour déterminer un ensemble de coordonnées de soudage de l'au moins un plot de cellule sur la base de l'ensemble de coordonnées de repérage de l'au moins un plot de cellule ; et
le dispositif de soudage (30) étant configuré pour souder l'au moins un plot de cellule sur la base de l'ensemble de coordonnées de soudage de l'au moins un plot de cellule, pour mettre en œuvre des connexions électriques entre des cellules dans le produit à souder ;
le repérage signifiant détecter une position de chaque plot de cellule dans le produit à souder ; et
le système étant **caractérisé en ce que** le repérage, sous un guidage basé sur des données de produit d'un produit à souder, d'au moins un plot de cellule dans le produit à souder, pour obtenir un ensemble de coordonnées de repérage de l'au moins un plot de cellule, comprend les opérations consistant à :
déterminer un ensemble de coordonnées photographiques de l'au moins un plot de cellule sur la base d'un schéma de structure de produit du produit à souder, les données de produit comprenant le schéma de structure de produit ; et
photographier l'au moins un plot de cellule sur la base de l'ensemble de coordonnées photographiques de l'au moins un plot de cellule, pour obtenir l'ensemble de coordonnées de repérage de l'au moins un plot de cellule ; et
la détermination d'un ensemble de coordonnées photographiques de l'au moins un plot de cellule sur la base d'un schéma de structure de produit du produit à souder comprenant les opérations consistant à :
analyser le schéma de structure de produit du produit à souder, pour obtenir un ensemble de coordonnées textuelles de l'au moins un plot de cellule ;
balayer l'ensemble de coordonnées textuelles de l'au moins un plot de cellule pour obtenir un numéro de rangée et un numéro de colonne qui correspondent à chacun de l'au moins un plot de cellule ; et
générer l'ensemble de coordonnées photographiques de l'au moins un plot de cellule sur la base du numéro de rangée et du numéro de colonne qui correspondent à chaque plot de cellule.

11. Système de soudage de plots selon la revendication 10, le dispositif de soudage (30) comprenant un premier robot de soudage (31), un second robot de soudage (32), un premier ensemble de mécanismes de pressurisation (33) et un second ensemble de mécanismes de pressurisation (34) ; et
le dispositif de commande étant en outre configuré pour diviser l'au moins un plot de cellule en un premier ensemble de plots de cellule et un second ensemble de plots de cellule, affecter le premier ensemble de plots de cellule au premier robot de soudage (31) et au premier ensemble de mécanismes de pressurisation (33), et affecter le second ensemble de plots de cellule au second robot de soudage (32) et au second ensemble de mécanismes de pressurisation (34), éventuellement le premier robot de soudage (31) comprenant un premier composant de soudage (35), et le second robot de soudage (32) comprenant un second composant de soudage (36) ;
le dispositif de commande étant en outre configuré pour déterminer un ensemble de coordonnées de soudage pour le premier robot de soudage (31), un ensemble de coordonnées de pression vers le bas pour le premier ensemble de mécanismes de pressurisation (33), et un ensemble de décalages du premier composant de soudage (35) du premier robot de soudage (31) sous chaque ensemble de coordonnées de soudage sur la base de coordonnées de repérage de chaque quantité prédéfinie de premiers plots de cellule dans le premier ensemble de plots de cellule ; et
le dispositif de commande étant en outre configuré pour déterminer un ensemble de coordonnées de soudage pour le second robot de soudage (32), un ensemble de coordonnées de pression vers le bas pour le second ensemble de mécanismes de pressurisation (34), et un ensemble de décalages du second composant de soudage (36) du second robot de soudage (32) sous chaque ensemble de coordonnées de soudage sur la base de coordonnées de repérage de chaque quantité prédéfinie de seconds plots de cellule dans le second ensemble de plots de cellule.

12. Système de soudage de plots selon la revendication 11,
le premier robot de soudage (31) étant configuré pour souder chaque quantité prédéfinie de premiers plots de cellule après que le premier ensemble de mécanismes de pressurisation (33) a pressurisé chaque quantité prédéfinie de premiers plots de cellule et un premier matériau de soudage ; et
le second robot de soudage (32) étant configuré pour souder chaque quantité prédéfinie de seconds plots de cellule après que le second ensemble de mécanismes de pressurisation (34) a pressurisé chaque quantité prédéfinie de seconds plots de cellule et un second matériau de soudage, éventuellement :
le premier robot de soudage (31) étant en outre configuré pour piloter, sur la base de l'ensemble de décalages du premier composant de soudage (35), le premier composant de soudage (35) pour souder chaque quantité prédéfinie de premiers plots de cellule ; et
le second robot de soudage (32) étant en outre configuré pour piloter, sur la base de l'ensemble de décalages du second composant de soudage (36), le second composant de soudage (36) pour souder chaque quantité prédéfinie de seconds plots de cellule.

13. Système de soudage de plots selon la revendication 11 ou 12, le premier ensemble de mécanismes de pressurisation (33) et le second ensemble de mécanismes de pressurisation (34) étant adaptés à des espacements de plots de différents produits ; et
le premier ensemble de mécanismes de pressurisation (33) et le second ensemble de mécanismes de pressurisation (34) comprenant chacun une quantité prédéfinie d'organes de pressurisation.
